# EUROPEAN PATENT APPLICATION

(11) **EP 4 842 046 A1**
(43) Date of publication of application: **18.11.2026**
(21) Application number: 24915933.6
(22) Date of filing: 09.01.2024
(51) Int. Cl.: H04W 28/02

(54) **COMMUNICATION METHODS, TERMINAL, ACCESS NETWORK DEVICE, NETWORK ELEMENT AND COMMUNICATION SYSTEM**

(71) Applicant: Beijing Xiaomi Mobile Software Co., Ltd., Beijing 100085 (CN)
(72) Inventor: WU, Jinhua, Beijing 100085 (CN); LIU, Jianning, Beijing 100085 (CN); SHEN, Yang, Beijing 100085 (CN)
(74) Representative: Hersina, Günter
(86) International application number: PCT/CN2024/071387
(87) International publication number: WO 2025/147852

(57) **Abstract**

The present disclosure relates to communication methods, a terminal, an access network device, a network element, a communication system and a storage medium. A method comprises: sending first information, wherein the first information is configured to indicate a first rule associated with a first device, with the first device being connecting behind a terminal, and the first information comprises identification information related to the first device. By means of the solution of the present disclosure, the support for the QoS characteristic of a service data flow of a device connecting behind a terminal is realized.

## Description

### FIELD

The present disclosure relates to the field of communication technologies, and in particular, to a communication method, a terminal, an access network device, a network element, a communication system, and a storage medium.

### BACKGROUND

In communication technologies such as fifth generation mobile networks (5G), mobile media services, online extended reality (XR), online games, video-based machine or drone remote control, etc., are expected to provide more and more traffic to communication networks.

Currently, since XRM and interactive media services (i.e., eXtended Reality and interactive media services) have the characteristics of high throughput, low latency, and high reliability requirements, it is necessary to comprehensively consider the quality of service (QoS) characteristics of a specific service data flow (SDF) in a service.

### SUMMARY

The embodiments of the present disclosure provide a communication method, a terminal, an access network device, a network element, a communication system, and a storage medium, to support the QoS characteristics of a service data flow of a device connecting behind a terminal.

According to a first aspect of the embodiments of the present disclosure, a communication method is provided. The communication method is applied to a first network element. The above communication method includes: sending first information, where the first information is configured to indicate a first rule associated with a first device, and the first device is connecting behind a terminal, where the first information includes identification information related to the first device.

According to a second aspect of the embodiments of the present disclosure, a communication method is provided. The communication method is applied to a second network element. The above communication method includes: sending fifth information, where the fifth information is used to request determining a first rule associated with a first device, and the first device is connecting behind a terminal, where the fifth information includes identification information associated with the first device.

According to a third aspect of the embodiments of the present disclosure, a communication method is provided. The communication method is applied to a third network element. The above communication method includes: receiving fifth information, where the fifth information is used to request determining a first rule associated with a first device, and the first device is connecting behind a terminal, where the fifth information includes identification information associated with the first device.

According to a fourth aspect of the embodiments of the present disclosure, a communication method is provided. The communication method is applied to a fourth network element. The above communication method includes: receiving seventh information, where the seventh information is configured to indicate data associated with a first device, and the first device is connecting behind a terminal, where the seventh information includes identification information associated with the first device.

According to a fifth aspect of the embodiments of the present disclosure, a communication method is provided. The communication method is applied to a fifth network element. The above communication method includes: receiving third information, where the third information is configured to indicate a second rule associated with a first device, the first device is connecting behind a terminal, and the second rule is used to perform QoS processing for a first service corresponding to the first device.

According to a sixth aspect of the embodiments of the present disclosure, a communication method is provided. The communication method is applied to an access network device. The above communication method includes: receiving eighth information, where the eighth information is configured to indicate a third rule associated with a first device, and the first device is connecting behind a terminal, where the eighth information includes identification information associated with the first device.

According to a seventh aspect of the embodiments of the present disclosure, a communication method is provided. The communication method is applied to a terminal. The above communication method includes: receiving first information, where the first information is configured to indicate a first rule associated with a first device, and the first device is connecting behind the terminal, where the first information includes identification information related to the first device.

According to an eighth aspect of the embodiments of the present disclosure, a communication method is provided. The communication method is performed by a core network. The core network includes a first network element, a second network element, and a third network element. The above communication method includes: the second network element sends fifth information to the third network element, where the fifth information is used to request determining a first rule associated with the first device, and the first device is connecting behind the terminal, where the first information includes identification information related to the first device; the first network element sends first information, where the first information is configured to indicate the first rule associated with the first device, and the first information includes the identification information related to the first device.

According to a ninth aspect of the embodiments of the present disclosure, a communication method is provided. The communication method is performed by a core network. The core network includes a first network element and a fifth network element. The above communication method includes: the first network element sends third information to the fifth network element, where the third information is configured to indicate a second rule associated with a first device, and the second rule is used to perform a quality of service (QoS) processing for a first service corresponding to the first device.

According to a tenth aspect of the embodiments of the present disclosure, a first network element is provided. The first network element includes: a transceiver module configured to send first information, where the first information is configured to indicate a first rule associated with a first device, and the first device is connecting behind a terminal, where the first information includes identification information related to the first device.

According to an eleventh aspect of the embodiments of the present disclosure, a second network element is provided. The second network element includes: a transceiver module configured to send fifth information, where the fifth information is used to request determining a first rule associated with a first device, and the first device is connecting behind a terminal, where the fifth information includes identification information associated with the first device.

According to a twelfth aspect of the embodiments of the present disclosure, a third network element is provided. The third network element includes: a transceiver module configured to receive fifth information, where the fifth information is used to request determining a first rule associated with a first device, and the first device is connecting behind a terminal, where the fifth information includes identification information associated with the first device.

According to a thirteenth aspect of the embodiments of the present disclosure, a fourth network element is provided. The fourth network element includes: a transceiver module configured to receive seventh information, where the seventh information is configured to indicate data associated with a first device, and the first device is connecting behind a terminal, where the seventh information includes identification information associated with the first device.

According to a fourteenth aspect of the embodiments of the present disclosure, a fifth network element is provided. The fifth network element includes: a transceiver module configured to receive third information, where the third information is configured to indicate a second rule associated with a first device, the first device is connecting behind a terminal, and the second rule is used to perform QoS processing for a first service corresponding to the first device.

According to a fifteenth aspect of the embodiments of the present disclosure, an access network device is provided. The access network device includes: a transceiver module configured to receive eighth information, where the eighth information is configured to indicate a third rule associated with a first device, and the first device is connecting behind a terminal, where the eighth information includes identification information associated with the first device.

According to a sixteenth aspect of the embodiments of the present disclosure, a terminal is provided. The terminal includes: a transceiver module configured to receive first information, where the first information is configured to indicate a first rule associated with a first device, and the first device is connecting behind the terminal, where the first information includes identification information related to the first device.

According to a seventeenth aspect of the embodiments of the present disclosure, a first network element is provided. The first network element includes: one or more processors; and a memory storing instructions, where the instructions, when executed by the first network element, cause the first network element to implement the communication method according to the first aspect.

According to an eighteenth aspect of the embodiments of the present disclosure, a second network element is provided. The second network element includes: one or more processors; and a memory storing instructions, where the instructions, when executed by the second network element, cause the second network element to implement the communication method based on the second aspect.

According to a nineteenth aspect of the embodiments of the present disclosure, a third network element is provided. The third network element includes: one or more processors; and a memory storing instructions, where the instructions, when executed by the third network element, cause the third network element to implement the communication method according to the third aspect.

According to a twentieth aspect of the embodiments of the present disclosure, a fourth network element is provided. The fourth network element includes: one or more processors; and a memory storing instructions, where the instructions, when executed by the fourth network element, cause the fourth network element to implement the communication method according to the fourth aspect.

According to a twenty-first aspect of the embodiments of the present disclosure, a fifth network element is provided. The fifth network element includes: one or more processors; and a memory storing instructions, where the instructions, when executed by the fifth network element, cause the fifth network element to implement the communication method according to the fifth aspect.

According to a twenty-second aspect of the embodiments of the present disclosure, an access network device is provided. The access network device includes: one or more processors; and a memory storing instructions, where the instructions, when executed by the access network device, cause the access network device to implement the communication method according to the sixth aspect.

According to a twenty-third aspect of the embodiments of the present disclosure, a terminal is provided. The terminal includes: one or more processors; and a memory storing instructions, where the instructions, when executed by the terminal, cause the terminal to implement the communication method according to the seventh aspect.

According to a twenty-fourth aspect of the embodiments of the present disclosure, a communication system is provided. The communication system includes a terminal, an access network device, and a core network device. The terminal is configured to implement the communication method according to the seventh aspect. The access network device is configured to implement the communication method according to the sixth aspect. The core network device is configured to implement the communication method according to the eighth aspect or the ninth aspect.

According to a twenty-fifth aspect of the embodiments of the present disclosure, a storage medium is provided. The storage medium stores instructions. When the instructions are run on a communication device, the communication device is caused to execute the communication method according to any one of the first aspect to the ninth aspect.

According to a twenty-sixth aspect of the embodiments of the present disclosure, a program product is provided. When the program product is executed by a communication device, the communication device is caused to execute the communication method according to any one of the first aspect to the ninth aspect.

According to a twenty-seventh aspect of the embodiments of the present disclosure, a computer program is provided. When the computer program is run on a computer, the computer is caused to execute the communication method according to any one of the first aspect to the ninth aspect.

According to a twenty-eighth aspect of the embodiments of the present disclosure, a chip or a chip system is provided. The chip or the chip system includes a processing circuit. The processing circuit is configured to execute the communication method according to any one of the first aspect to the ninth aspect.

Through the embodiments of the present disclosure, QoS processing can be performed for a service data flow related to a device connecting behind a terminal, thereby providing support for the QoS characteristics of the service data flow of the device connecting behind the terminal

It should be understood that the above general description and the following detailed description are only exemplary and explanatory and do not constitute a limitation on the embodiments of the present disclosure.

### BRIEF DESCRIPTION OF THE DRAWINGS

In order to more clearly illustrate the technical solutions in the embodiments of the present disclosure, the following briefly introduces the drawings required for the description of the embodiments. The following drawings are only some embodiments of the present disclosure and do not impose specific limitations on the protection scope of the present disclosure.
FIG. 1A is a schematic diagram of the architecture of a communication system according to an embodiment of the present disclosure.
FIG. 1B is a schematic diagram of the architecture of an implementation of a communication system according to an embodiment of the present disclosure.
FIG. 1C is a schematic diagram of the architecture of another implementation of a communication system according to an embodiment of the present disclosure.
FIG. 2A is an interaction schematic diagram of a communication method according to an embodiment of the present disclosure.
FIG. 2B is an interaction schematic diagram of a communication method according to an embodiment of the present disclosure.
FIG. 3A is a flowchart schematic diagram of a communication method according to an embodiment of the present disclosure.
FIG. 3B is a flowchart schematic diagram of a communication method according to an embodiment of the present disclosure.
FIG. 4A is a flowchart schematic diagram of a communication method according to an embodiment of the present disclosure.
FIG. 4B is a flowchart schematic diagram of a communication method according to an embodiment of the present disclosure.
FIG. 5A is a flowchart schematic diagram of a communication method according to an embodiment of the present disclosure.
FIG. 5B is a flowchart schematic diagram of a communication method according to an embodiment of the present disclosure.
FIG. 6 is a flowchart schematic diagram of a communication method according to an embodiment of the present disclosure.
FIG. 7 is a flowchart schematic diagram of a communication method according to an embodiment of the present disclosure.
FIG. 8 is a flowchart schematic diagram of a communication method according to an embodiment of the present disclosure.
FIG. 9 is a flowchart schematic diagram of a communication method according to an embodiment of the present disclosure.
FIG. 10A is an interaction schematic diagram of a communication method according to an embodiment of the present disclosure.
FIG. 10B is an interaction schematic diagram of a communication method according to an embodiment of the present disclosure.
FIG. 10C is an interaction schematic diagram of a communication method according to an embodiment of the present disclosure.
FIG. 10D is an interaction schematic diagram of a communication method according to an embodiment of the present disclosure.
FIG. 10E is an interaction schematic diagram of a communication method according to an embodiment of the present disclosure.
FIG. 11A is an interaction schematic diagram of an exemplary implementation of a communication method according to an embodiment of the present disclosure.
FIG. 11B is an interaction schematic diagram of an exemplary implementation of a communication method according to an embodiment of the present disclosure.
FIG. 12 is a structural schematic diagram of a communication device according to an embodiment of the present disclosure.
FIG. 13A is a structural schematic diagram of a communication device according to an embodiment of the present disclosure.
FIG. 13B is a structural schematic diagram of a chip according to an embodiment of the present disclosure.

### DETAILED DESCRIPTION

The embodiments of the present disclosure provide a communication method, a terminal, an access network device, a network element, a communication system, and a storage medium.

In a first aspect, the embodiments of the present disclosure provide a communication method. The communication method is applied to a first network element. The above communication method includes: sending first information, where the first information is configured to indicate a first rule associated with a first device, and the first device is connecting behind a terminal, where the first information includes identification information related to the first device.

In the above embodiment, carrying the identification information related to the first device in the sent first information can enable the first rule indicated by the first information to be associated with the first device. In this way, identification of the data flow corresponding to the first device can be achieved and mapped to the corresponding QoS flow, so as to support the QoS characteristics of the service data flow of the first device connecting behind the terminal.

In conjunction with some embodiments of the first aspect, in some embodiments, the identification information may include at least one of: first identification information, where the first identification information is used to identify the first device; or second identification information, where the second identification information is used to identify an application associated with the first device.

In the above embodiment, the identification information may include the first identification information and/or the second identification information. The first identification information can identify the first device, thereby enabling direct identification of the first device. The second identification information can identify the application related to the first device, thereby enabling indirect identification of the first device. Thus, different identification methods can provide different granularities of identification for the data flow of the first device, enhancing the flexibility of identifying the first device.

In conjunction with some embodiments of the first aspect, in some embodiments, the first information may further include first routing information, where the first routing information is configured to indicate that a traffic associated with the first device corresponds to one of: an application service data flow associated with the first device, a single packet data unit (PDU) session, or a single QoS flow group.

In conjunction with some embodiments of the first aspect, in some embodiments, the first rule may include a user equipment route selection policy (URSP) rule.

In conjunction with some embodiments of the first aspect, in some embodiments, the identification information may be carried in a traffic descriptor of the URSP rule.

In conjunction with some embodiments of the first aspect, in some embodiments, the first information may include first routing information, and the first routing information may be carried in a route selection descriptor of the URSP rule.

In the above embodiments, the first rule may be a URSP rule. By modifying the URSP rule, adding parameters or reusing parameters, the UE policy for the data flow of the first service of the first device can be realized.

In conjunction with some embodiments of the first aspect, in some embodiments, the identification information may correspond to at least one of: an identifier of the first device; an application identifier associated with the first device; an application group identifier associated with the first device; a first data network name (DNN); or a first single network slice selection assistance information (S-NSSAI).

In the above embodiment, the identification information of the first device may correspond to one or more of the identifier of the first device, the application identifier associated with the first device, the application group identifier associated with the first device, the first DNN, and the first S-NSSAI. Thus, different information can correspond to the first service of the first device, providing flexible and multi-granularity identification of the first device.

In conjunction with some embodiments of the first aspect, in some embodiments, the above method may further include: receiving second information, where the second information is configured to indicate first data associated with the first device; and determining the first rule based on the second information.

In conjunction with some embodiments of the first aspect, in some embodiments, the above method may further include: sending third information, where the third information is configured to indicate a second rule associated with the first device, and the second rule is used to perform QoS processing for a first service corresponding to the first device.

In conjunction with some embodiments of the first aspect, in some embodiments, the above method may further include: receiving fourth information, where the fourth information is configured to indicate a service characteristic of the first service; and determining the second rule based on the fourth information.

In a second aspect, the embodiments of the present disclosure provide a communication method. The communication method is applied to a second network element. The above communication method includes: sending fifth information, where the fifth information is used to request determining a first rule associated with a first device, and the first device is connecting behind a terminal, where the fifth information includes identification information associated with the first device.

In the above embodiment, the second network element can request determining the first rule associated with the first device by sending the fifth information. By carrying the identification information related to the first device in the fifth information, the first rule determined in response to the fifth information can be associated with the first device. In this way, identification of the data flow corresponding to the first device can be achieved and mapped to the corresponding QoS flow, so as to support the QoS characteristics of the service data flow of the first device connecting behind the terminal.

In conjunction with some embodiments of the second aspect, in some embodiments, the above method may further include: sending sixth information, where the sixth information is used to request a session resource for a first service of the first device, where the sixth information includes identification information associated with the first device.

In conjunction with some embodiments of the second aspect, in some embodiments, the identification information may include at least one of: first identification information, where the first identification information is used to identify the first device; or second identification information, where the second identification information is used to identify an application associated with the first device.

In conjunction with some embodiments of the second aspect, in some embodiments, the identification information may correspond to at least one of: an identifier of the first device; an application identifier associated with the first device; an application group identifier associated with the first device; a first DNN; a first S-NSSAI; or identification information of a first QoS flow group.

In a third aspect, the embodiments of the present disclosure provide a communication method. The communication method is applied to a third network element. The above communication method includes: receiving fifth information, where the fifth information is used to request determining a first rule associated with a first device, and the first device is connecting behind a terminal, where the fifth information includes identification information associated with the first device.

In the above embodiment, the fifth information received by the third network element can request determining the first rule associated with the first device. By carrying the identification information related to the first device in the fifth information, the first rule determined in response to the fifth information can be associated with the first device. In this way, identification of the data flow corresponding to the first device can be achieved and mapped to the corresponding QoS flow, so as to support the QoS characteristics of the service data flow of the first device connecting behind the terminal.

In conjunction with some embodiments of the third aspect, in some embodiments, the above method may further include: sending seventh information, where the seventh information is configured to indicate data associated with the first device.

In conjunction with some embodiments of the third aspect, in some embodiments, the above method may further include: receiving sixth information, where the sixth information is used to request a session resource for a first service of the first device, where the sixth information includes identification information associated with the first device. In conjunction with some embodiments of the third aspect, in some embodiments, the above method may further include: sending fourth information, where the fourth information is configured to indicate a service characteristic of the first service.

In conjunction with some embodiments of the third aspect, in some embodiments, the identification information may include at least one of: first identification information, where the first identification information is used to identify the first device; or second identification information, where the second identification information is used to identify an application associated with the first device.

In conjunction with some embodiments of the third aspect, in some embodiments, the identification information may correspond to at least one of: an identifier of the first device; an application identifier associated with the first device; an application group identifier associated with the first device; a first DNN; a first S-NSSAI; or identification information of a first QoS flow group.

In a fourth aspect, the embodiments of the present disclosure provide a communication method. The communication method is applied to a fourth network element. The above communication method includes: receiving seventh information, where the seventh information is configured to indicate data associated with a first device, and the first device is connecting behind a terminal, where the seventh information includes identification information associated with the first device.

In conjunction with some embodiments of the fourth aspect, in some embodiments, the above method may further include: sending second information, where the second information is configured to indicate first data associated with the first device.

In conjunction with some embodiments of the fourth aspect, in some embodiments, the identification information may include at least one of: first identification information, where the first identification information is used to identify the first device; or second identification information, where the second identification information is used to identify an application associated with the first device.

In conjunction with some embodiments of the fourth aspect, in some embodiments, the identification information may correspond to at least one of: an identifier of the first device; an application identifier associated with the first device; an application group identifier associated with the first device; a first DNN; a first S-NSSAI; or identification information of a first QoS flow group.

In a fifth aspect, the embodiments of the present disclosure provide a communication method. The communication method is applied to a fifth network element. The above communication method includes: receiving third information, where the third information is configured to indicate a second rule associated with a first device, the first device is connecting behind a terminal, and the second rule is used to perform QoS processing for a first service corresponding to the first device.

In conjunction with some embodiments of the fifth aspect, in some embodiments, the above method may further include: sending eighth information, where the eighth information is configured to indicate a third rule associated with the first device, where the eighth information includes identification information associated with the first device.

In conjunction with some embodiments of the fifth aspect, in some embodiments, the third rule may include a QoS attribute.

In conjunction with some embodiments of the fifth aspect, in some embodiments, the identification information may include at least one of: first identification information, where the first identification information is used to identify the first device; or second identification information, where the second identification information is used to identify an application associated with the first device.

In conjunction with some embodiments of the fifth aspect, in some embodiments, the identification information may correspond to at least one of: an identifier of the first device; an application identifier associated with the first device; an application group identifier associated with the first device; a first DNN; a first S-NSSAI; or identification information of a first QoS flow group.

In a sixth aspect, the embodiments of the present disclosure provide a communication method. The communication method is applied to an access network device. The above communication method includes: receiving eighth information, where the eighth information is configured to indicate a third rule associated with a first device, and the first device is connecting behind a terminal, where the eighth information includes identification information associated with the first device.

In conjunction with some embodiments of the sixth aspect, in some embodiments, the third rule may include a QoS attribute.

In conjunction with some embodiments of the sixth aspect, in some embodiments, the identification information may include at least one of: first identification information, where the first identification information is used to identify the first device; or second identification information, where the second identification information is used to identify an application associated with the first device.

In conjunction with some embodiments of the sixth aspect, in some embodiments, the identification information may correspond to at least one of: an identifier of the first device; an application identifier associated with the first device; an application group identifier associated with the first device; a first DNN; a first S-NSSAI; or identification information of a first QoS flow group.

In a seventh aspect, the embodiments of the present disclosure provide a communication method. The communication method is applied to a terminal. The above communication method includes: receiving first information, where the first information is configured to indicate a first rule associated with a first device, and the first device is connecting behind the terminal, where the first information includes identification information related to the first device.

In the above embodiment, carrying the identification information related to the first device in the first information received by the terminal can enable the first rule indicated by the first information to be associated with the first device. In this way, the terminal can identify the data flow corresponding to the first device and map it to the corresponding QoS flow, so as to support the QoS characteristics of the service data flow of the first device connecting behind the terminal.

In conjunction with some embodiments of the seventh aspect, in some embodiments, the identification information may include at least one of: first identification information, where the first identification information is used to identify the first device; or second identification information, where the second identification information is used to identify an application associated with the first device.

In conjunction with some embodiments of the seventh aspect, in some embodiments, the first information may further include first routing information, where the first routing information is configured to indicate that a traffic associated with the first device corresponds to one of: an application service data flow associated with the first device, a single PDU session, or a single QoS flow group.

In conjunction with some embodiments of the seventh aspect, in some embodiments, the first rule may include a URSP rule.

In conjunction with some embodiments of the seventh aspect, in some embodiments, the identification information may be carried in a traffic descriptor of the URSP rule.

In conjunction with some embodiments of the seventh aspect, in some embodiments, the first information may include first routing information, and the first routing information may be carried in a route selection descriptor of the URSP rule.

In conjunction with some embodiments of the seventh aspect, in some embodiments, the identification information may correspond to at least one of: an identifier of the first device; an application identifier associated with the first device; an application group identifier associated with the first device; a first DNN; or a first S-NSSAI.

In conjunction with some embodiments of the seventh aspect, in some embodiments, the above method may further include: determining, according to the first rule, a data flow corresponding to a traffic of a first service of the first device, where the first rule corresponds to the identification information of the first device.

In conjunction with some embodiments of the seventh aspect, in some embodiments, the operation of determining, according to the first rule, the data flow corresponding to the traffic of the first service of the first device may include one of: determining an existing data flow corresponding to the traffic of the first service of the first device; or creating a new data flow corresponding to the traffic of the first service of the first device.

In conjunction with some embodiments of the seventh aspect, in some embodiments, the data flow may include at least one of: an application service data flow, a PDU session, or a QoS flow group.

In an eighth aspect, the embodiments of the present disclosure provide a communication method. The communication method is applied to a core network. The core network includes a first network element, a second network element, and a third network element. The above communication method includes: the second network element sends fifth information to the third network element, where the fifth information is used to request determining the first rule associated with the first device, and the first device is connecting behind the terminal, where the fifth information includes identification information related to the first device; the first network element sends first information, where the first information is configured to indicate the first rule associated with the first device, and the first information includes the identification information related to the first device.

In conjunction with some embodiments of the eighth aspect, in some embodiments, the core network further includes a fourth network element. The above communication method includes: the third network element sends seventh information to the fourth network element, where the seventh information is configured to indicate data associated with the first device; the fourth network element sends second information to the first network element, where the second information is configured to indicate first data associated with the first device.

In a ninth aspect, the embodiments of the present disclosure provide a communication method. The communication method is applied to a core network. The core network includes a first network element and a fifth network element. The above communication method includes: the first network element sends third information to the fifth network element, where the third information is configured to indicate a second rule associated with a first device, and the second rule is used to perform QoS processing for a first service corresponding to the first device.

In conjunction with some embodiments of the ninth aspect, in some embodiments, the above communication method may further include: the fifth network element sends eighth information, where the eighth information is configured to indicate a third rule associated with the first device, and the eighth information includes identification information associated with the first device.

In conjunction with some embodiments of the ninth aspect, in some embodiments, the core network may further include a second network element and a third network element. The above communication method may further include: the second network element sends sixth information to the third network element, where the sixth information is used to request a session resource for the first service of the first device, and the sixth information includes identification information associated with the first device; the third network element sends fourth information to the first network element, where the fourth information is configured to indicate a service characteristic of the first service.

In a tenth aspect, the embodiments of the present disclosure provide a first network element. The first network element includes: a transceiver module configured to send first information, where the first information is configured to indicate a first rule associated with a first device, and the first device is connecting behind a terminal, where the first information includes identification information related to the first device.

In conjunction with some embodiments of the tenth aspect, in some embodiments, the identification information may include at least one of: first identification information, where the first identification information is used to identify the first device; or second identification information, where the second identification information is used to identify an application associated with the first device.

In conjunction with some embodiments of the tenth aspect, in some embodiments, the first information may further include first routing information, where the first routing information is configured to indicate that a traffic associated with the first device corresponds to one of: an application service data flow associated with the first device, a single PDU session, or a single QoS flow group.

In conjunction with some embodiments of the tenth aspect, in some embodiments, the first rule may include a URSP rule.

In conjunction with some embodiments of the tenth aspect, in some embodiments, the identification information may be carried in a traffic descriptor of the URSP rule.

In conjunction with some embodiments of the tenth aspect, in some embodiments, the first information may include first routing information, and the first routing information may be carried in a route selection descriptor of the URSP rule.

In conjunction with some embodiments of the tenth aspect, in some embodiments, the identification information may correspond to at least one of: an identifier of the first device; an application identifier associated with the first device; an application group identifier associated with the first device; a first DNN; or a first S-NSSAI.

In conjunction with some embodiments of the tenth aspect, in some embodiments, the transceiver module may be further configured to: receive second information, where the second information is configured to indicate first data associated with the first device; the first network element may further include: a processing module configured to determine the first rule based on the second information.

In conjunction with some embodiments of the tenth aspect, in some embodiments, the transceiver module may be further configured to: send third information, where the third information is configured to indicate a second rule associated with the first device, and the second rule is used to perform QoS processing for a first service corresponding to the first device.

In conjunction with some embodiments of the tenth aspect, in some embodiments, the transceiver module may be further configured to: receive fourth information, where the fourth information is configured to indicate a service characteristic of the first service; the processing module may be further configured to: determine the second rule based on the fourth information.

In an eleventh aspect, the embodiments of the present disclosure provide a second network element. The second network element includes: a transceiver module configured to send fifth information, where the fifth information is used to request determining a first rule associated with a first device, and the first device is connecting behind a terminal, where the fifth information includes identification information associated with the first device.

In conjunction with some embodiments of the eleventh aspect, in some embodiments, the transceiver module may be further configured to: send sixth information, where the sixth information is used to request a session resource for a first service of the first device, where the sixth information includes identification information associated with the first device.

In conjunction with some embodiments of the eleventh aspect, in some embodiments, the identification information may include at least one of: first identification information, where the first identification information is used to identify the first device; or second identification information, where the second identification information is used to identify an application associated with the first device.

In conjunction with some embodiments of the eleventh aspect, in some embodiments, the identification information may correspond to at least one of: an identifier of the first device; an application identifier associated with the first device; an application group identifier associated with the first device; a first DNN; a first S-NSSAI; or identification information of a first QoS flow group.

In a twelfth aspect, the embodiments of the present disclosure provide a third network element. The third network element includes: a transceiver module configured to receive fifth information, where the fifth information is used to request determining a first rule associated with a first device, and the first device is connecting behind a terminal, where the fifth information includes identification information associated with the first device.

In conjunction with some embodiments of the twelfth aspect, in some embodiments, the transceiver module may be further configured to: send seventh information, where the seventh information is configured to indicate data associated with the first device.

In conjunction with some embodiments of the twelfth aspect, in some embodiments, the transceiver module may be further configured to: receive sixth information, where the sixth information is used to request a session resource for a first service of the first device, where the sixth information includes identification information associated with the first device.

In conjunction with some embodiments of the twelfth aspect, in some embodiments, the transceiver module may be further configured to: send fourth information, where the fourth information is configured to indicate a service characteristic of the first service.

In conjunction with some embodiments of the twelfth aspect, in some embodiments, the identification information may include at least one of: first identification information, where the first identification information is used to identify the first device; or second identification information, where the second identification information is used to identify an application associated with the first device.

In conjunction with some embodiments of the twelfth aspect, in some embodiments, the identification information may correspond to at least one of: an identifier of the first device; an application identifier associated with the first device; an application group identifier associated with the first device; a first DNN; a first S-NSSAI; or identification information of a first QoS flow group.

In a thirteenth aspect, the embodiments of the present disclosure provide a fourth network element. The fourth network element includes: a transceiver module configured to receive seventh information, where the seventh information is configured to indicate data associated with a first device, and the first device is connecting behind a terminal, where the seventh information includes identification information associated with the first device.

In conjunction with some embodiments of the thirteenth aspect, in some embodiments, the transceiver module may be further configured to: send second information, where the second information is configured to indicate first data associated with the first device.

In conjunction with some embodiments of the thirteenth aspect, in some embodiments, the identification information may include at least one of: first identification information, where the first identification information is used to identify the first device; or second identification information, where the second identification information is used to identify an application associated with the first device.

In conjunction with some embodiments of the thirteenth aspect, in some embodiments, the identification information may correspond to at least one of: an identifier of the first device; an application identifier associated with the first device; an application group identifier associated with the first device; a first DNN; a first S-NSSAI; or identification information of a first QoS flow group.

In a fourteenth aspect, the embodiments of the present disclosure provide a fifth network element. The fifth network element includes: a transceiver module configured to receive third information, where the third information is configured to indicate a second rule associated with a first device, the first device is connecting behind a terminal, and the second rule is used to perform QoS processing for a first service corresponding to the first device.

In conjunction with some embodiments of the fourteenth aspect, in some embodiments, the transceiver module may be further configured to: send eighth information, where the eighth information is configured to indicate a third rule associated with the first device, where the eighth information includes identification information associated with the first device.

In conjunction with some embodiments of the fourteenth aspect, in some embodiments, the third rule may include a QoS attribute.

In conjunction with some embodiments of the fourteenth aspect, in some embodiments, the identification information may include at least one of: first identification information, where the first identification information is used to identify the first device; or second identification information, where the second identification information is used to identify an application associated with the first device.

In conjunction with some embodiments of the fourteenth aspect, in some embodiments, the identification information may correspond to at least one of: an identifier of the first device; an application identifier associated with the first device; an application group identifier associated with the first device; a first DNN; a first S-NSSAI; or identification information of a first QoS flow group.

In a fifteenth aspect, the embodiments of the present disclosure provide an access network device. The access network device includes: a transceiver module configured to receive eighth information, where the eighth information is configured to indicate a third rule associated with a first device, and the first device is connecting behind a terminal, where the eighth information includes identification information associated with the first device.

In conjunction with some embodiments of the fifteenth aspect, in some embodiments, the third rule may include a QoS attribute.

In conjunction with some embodiments of the fifteenth aspect, in some embodiments, the identification information may include at least one of: first identification information, where the first identification information is used to identify the first device; or second identification information, where the second identification information is used to identify an application associated with the first device.

In conjunction with some embodiments of the fifteenth aspect, in some embodiments, the identification information may correspond to at least one of: an identifier of the first device; an application identifier associated with the first device; an application group identifier associated with the first device; a first DNN; a first S-NSSAI; or identification information of a first QoS flow group.

In a sixteenth aspect, the embodiments of the present disclosure provide a terminal. The terminal includes: a transceiver module configured to receive first information, where the first information is configured to indicate a first rule associated with a first device, and the first device is connecting behind the terminal, where the first information includes identification information related to the first device.

In conjunction with some embodiments of the sixteenth aspect, in some embodiments, the identification information may include at least one of: first identification information, where the first identification information is used to identify the first device; or second identification information, where the second identification information is used to identify an application associated with the first device.

In conjunction with some embodiments of the sixteenth aspect, in some embodiments, the first information may further include first routing information, where the first routing information is configured to indicate that a traffic associated with the first device corresponds to one of: an application service data flow associated with the first device, a single PDU session, or a single QoS flow group.

In conjunction with some embodiments of the sixteenth aspect, in some embodiments, the first rule may include a URSP rule.

In conjunction with some embodiments of the sixteenth aspect, in some embodiments, the identification information may be carried in a traffic descriptor of the URSP rule.

In conjunction with some embodiments of the sixteenth aspect, in some embodiments, the first information may include first routing information, and the first routing information may be carried in a route selection descriptor of the URSP rule.

In conjunction with some embodiments of the sixteenth aspect, in some embodiments, the identification information may correspond to at least one of: an identifier of the first device; an application identifier associated with the first device; an application group identifier associated with the first device; a first DNN; or a first S-NSSAI.

In conjunction with some embodiments of the sixteenth aspect, in some embodiments, the terminal may further include a processing module configured to determine, according to the first rule, a data flow corresponding to a traffic of a first service of the first device, where the first rule corresponds to the identification information of the first device.

In conjunction with some embodiments of the sixteenth aspect, in some embodiments, the processing module may be configured to perform one of: determining an existing data flow corresponding to the traffic of the first service of the first device; or creating a new data flow corresponding to the traffic of the first service of the first device.

In conjunction with some embodiments of the sixteenth aspect, in some embodiments, the data flow may include at least one of: an application service data flow, a PDU session, or a QoS flow group.

In a seventeenth aspect, the embodiments of the present disclosure provide a first network element. The first network element includes: one or more processors; and a memory storing instructions, where the instructions, when executed by the first network element, cause the first network element to implement the communication method according to the first aspect and its possible implementations.

In an eighteenth aspect, the embodiments of the present disclosure provide a second network element. The second network element includes: one or more processors; and a memory storing instructions, where the instructions, when executed by the second network element, cause the second network element to implement the communication method according to the second aspect and its possible implementations.

In a nineteenth aspect, the embodiments of the present disclosure provide a third network element. The third network element includes: one or more processors; and a memory storing instructions, where the instructions, when executed by the third network element, cause the third network element to implement the communication method according to the third aspect and its possible implementations.

In a twentieth aspect, the embodiments of the present disclosure provide a fourth network element. The fourth network element includes: one or more processors; and a memory storing instructions, where the instructions, when executed by the fourth network element, cause the fourth network element to implement the communication method according to the fourth aspect and its possible implementations.

In a twenty-first aspect, the embodiments of the present disclosure provide a fifth network element. The fifth network element includes: one or more processors; and a memory storing instructions, where the instructions, when executed by the fifth network element, cause the fifth network element to implement the communication method according to the fifth aspect and its possible implementations.

In a twenty-second aspect, the embodiments of the present disclosure provide an access network device. The access network device includes: one or more processors; and a memory storing instructions, where the instructions, when executed by the access network device, cause the access network device to implement the communication method according to the sixth aspect and its possible implementations.

In a twenty-third aspect, the embodiments of the present disclosure provide a terminal. The terminal includes: one or more processors; and a memory storing instructions, where the instructions, when executed by the terminal, cause the terminal to implement the communication method according to the seventh aspect and its possible implementations.

In a twenty-fourth aspect, the embodiments of the present disclosure provide a communication system. The communication system includes a terminal, an access network device, and a core network device. The terminal is configured to implement the communication method according to the seventh aspect and its possible implementations. The access network device is configured to implement the communication method according to the sixth aspect and its possible implementations. The core network device is configured to implement the communication method according to the eighth aspect and the ninth aspect, and their possible implementations.

In a twenty-fifth aspect, the embodiments of the present disclosure provide a storage medium. The storage medium stores instructions. When the instructions are run on a communication device, the communication device is caused to execute the communication method according to any one of the first aspect to the ninth aspect, and their possible implementations.

In a twenty-sixth aspect, the embodiments of the present disclosure provide a program product. When the program product is executed by a communication device, the communication device is caused to execute the communication method according to any one of the first aspect to the ninth aspect, and their possible implementations.

In a twenty-seventh aspect, the embodiments of the present disclosure provide a computer program. When the computer program is run on a computer, the computer is caused to execute the communication method according to any one of the first aspect to the ninth aspect, and their possible implementations.

In a twenty-eighth aspect, the embodiments of the present disclosure provide a chip or a chip system. The chip or the chip system includes a processing circuit. The processing circuit is configured to execute the communication method according to any one of the first aspect to the ninth aspect, and their possible implementations.

It can be understood that the above-mentioned first network element, second network element, third network element, fourth network element, fifth network element, access network device, terminal, communication system, storage medium, program product, computer program, chip, and chip system are all used to execute the communication method provided by the embodiments of the present disclosure. Therefore, the beneficial effects achievable by them can refer to the beneficial effects in the corresponding methods, which will not be repeated here.

The embodiments of the present disclosure provide a communication method, a terminal, an access network device, a network element, a communication system, and a storage medium. In some embodiments, terms such as communication method and information processing method can be interchanged, terms such as network element and information processing apparatus and communication apparatus can be interchanged, and terms such as information processing system and communication system can be interchanged.

The embodiments of the present disclosure are not exhaustive and are only illustrative of some embodiments and do not serve as specific limitations on the protection scope of the present disclosure. Unless inconsistent, each step in a certain embodiment can be implemented as an independent embodiment, and the steps can be combined arbitrarily. For example, a solution after removing some steps in a certain embodiment can also be implemented as an independent embodiment, and the order of the steps in a certain embodiment can be exchanged arbitrarily. In addition, optional implementations in a certain embodiment can be combined arbitrarily. Furthermore, the embodiments can be combined arbitrarily. For example, some or all steps of different embodiments can be combined arbitrarily. For another example, a certain embodiment can be combined arbitrarily with the optional implementations of other embodiments.

In the various embodiments of the present disclosure, unless otherwise specified and logically conflicting, the terms and/or descriptions between the embodiments are consistent and can be referred to each other, and the technical features in different embodiments can be combined to form new embodiments according to their internal logical relationships.

The terms used in the embodiments of the present disclosure are only for the purpose of describing specific embodiments and are not intended as limitations of the present disclosure.

In the embodiments of the present disclosure, unless otherwise stated, elements expressed in the singular form, such as "a," "an," "the," "said," "above," "the aforementioned," "this," etc., may mean "one and only one" or "one or more," "at least one," etc. For example, in translation, when using articles such as "a," "an," "the" as in English, the noun following the article can be understood as a singular expression form or a plural expression form.

In the embodiments of the present disclosure, "multiple" means two or more than two.

In some embodiments, terms such as "at least one of," "one or more," "a plurality of," "multiple," etc., can be interchanged.

In some embodiments, expressions such as "at least one of A and B," "A and/or B," "in one case A, in another case B," "in response to one case A, in response to another case B," etc., depending on the situation, may include the following technical solutions: in some embodiments, A (A is performed independently of B); in some embodiments, B (B is performed independently of A); in some embodiments, selection and execution from A and B (A and B are selectively executed); in some embodiments, A and B (both A and B are executed). Similar applies when there are more branches such as A, B, C, etc.

In some embodiments, expressions such as "A or B," depending on the situation, may include the following technical solutions: in some embodiments, A (A is performed independently of B); in some embodiments, B (B is performed independently of A); in some embodiments, selection and execution from A and B (A and B are selectively executed). Similar applies when there are more branches such as A, B, C, etc.

The prefix words such as "first," "second," etc., in the embodiments of the present disclosure are only used to distinguish different described objects and do not constitute restrictions on the position, order, priority, quantity, or content of the described objects. The statement of the described objects refers to the claims or the description in the context of the embodiments and should not constitute excessive limitations due to the use of prefix words. For example, if the described object is "field," the ordinal numbers before "field" in "first field" and "second field" do not restrict the position or order between the "fields," "first" and "second" do not restrict whether the "fields" they modify are in the same message, nor do they restrict the order of the "first field" and "second field." For another example, if the described object is "level," the ordinal numbers before "level" in "first level" and "second level" do not restrict the priority between the "levels." For another example, the quantity of the described object is not limited by the ordinal numbers and can be one or more. Taking "first apparatus" as an example, the number of "apparatuses" can be one or more. In addition, the objects modified by different prefix words can be the same or different. For example, if the described object is "apparatus," the "first apparatus" and "second apparatus" can be the same apparatus or different apparatuses, and their types can be the same or different. For another example, if the described object is "information," the "first information" and "second information" can be the same information or different information, and their contents can be the same or different.

In some embodiments, "include A," "comprise A," "configured to indicate A," "carry A" can be interpreted as directly carrying A or indirectly indicating A.

In some embodiments, terms such as "in response to ...," "in response to determining ...," "in the case of ...," "at the time of ...," "when ...," "if ...," "if ...," etc., can be interchanged.

In some embodiments, terms such as "greater than," "greater than or equal to," "not less than," "more than," "more than or equal to," "not less than," "higher than," "higher than or equal to," "not lower than," "above," etc., can be interchanged, and terms such as "less than," "less than or equal to," "not greater than," "fewer than," "fewer than or equal to," "not more than," "lower than," "lower than or equal to," "not higher than," "below," etc., can be interchanged.

In some embodiments, apparatuses, etc., can be interpreted as physical or virtual, and their names are not limited to those recorded in the embodiments. Terms such as "apparatus," "equipment," "device," "circuit," "network element," "node," "function," "unit," "section," "system," "network," "chip," "chip system," "entity," "subject," etc., can be interchanged.

In some embodiments, "network" can be interpreted as a device included in the network (e.g., access network device, core network device, etc.).

In some embodiments, terms such as "access network device (AN device)," "radio access network device (RAN device)," "base station (BS)," "radio base station," "fixed station," "node," "access point," "transmission point (TP)," "reception point (RP)," "transmission/reception point (TRP)," "panel," "antenna panel," "antenna array," "cell," "macro cell," "small cell," "femto cell," "pico cell," "sector," "cell group," "serving cell," "carrier," "component carrier," "bandwidth part (BWP)," etc., can be interchanged.

In some embodiments, terms such as "terminal," "terminal device," "user equipment (UE)," "user terminal," "mobile station (MS)," "mobile terminal (MT)," "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," etc., can be interchanged.

In some embodiments, an access network device, core network device, or network device can be replaced with a terminal. For example, the various embodiments of the present disclosure can also be applied to structures where communication between an access network device, core network device, or network device and a terminal is replaced with communication between multiple terminals (e.g., device-to-device (D2D), vehicle-to-everything (V2X), etc.). In this case, the terminal can also be configured to have all or part of the functions of the access network device. In addition, terms such as "uplink," "downlink," etc., can also be replaced with terms corresponding to inter-terminal communication (e.g., "side"). For example, uplink channels, downlink channels, etc., can be replaced with sidelink channels, and uplink links, downlink links, etc., can be replaced with sidelinks.

In some embodiments, a terminal can be replaced with an access network device, core network device, or network device. In this case, the access network device, core network device, or network device can also be configured to have all or part of the functions of the terminal.

In some embodiments, obtaining data, information, etc., may comply with the laws and regulations of the country where it is located.

In some embodiments, data, information, etc., can be obtained after obtaining user consent.

In addition, each element, each row, or each column in the tables of the embodiments of the present disclosure can be implemented as an independent embodiment, and any combination of elements, rows, and columns can also be implemented as an independent embodiment.

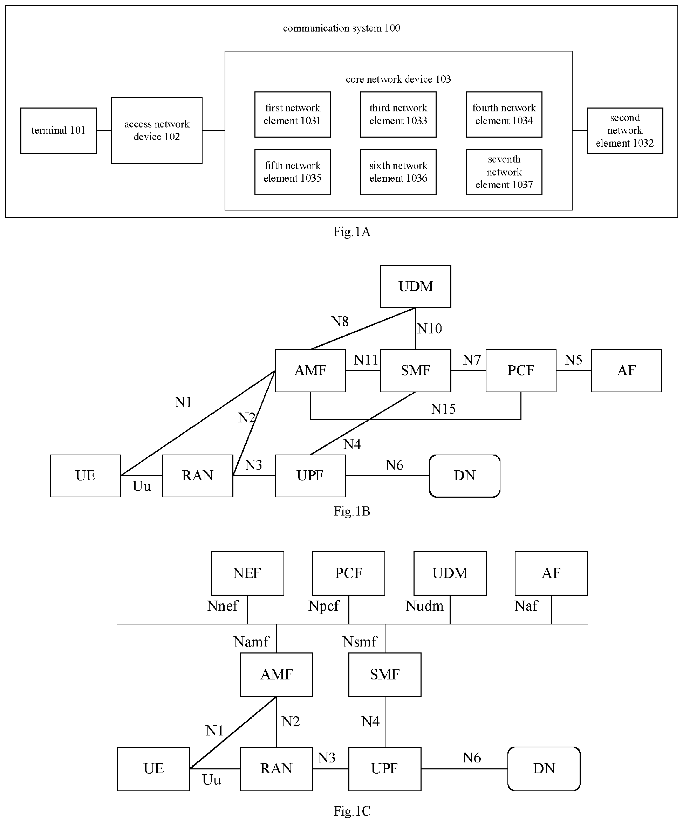

FIG. 1A is a schematic diagram of the architecture of a communication system according to an embodiment of the present disclosure. As shown in FIG. 1, the communication system 100 includes a terminal 101, an access network device 102, and a core network device 103.

In some embodiments, the terminal 101 includes, for example, at least one of a mobile phone, a wearable device, an Internet of Things device, a car with communication capabilities, a smart car, a tablet computer (Pad), a computer with wireless transceiver capabilities, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, a wireless terminal device in a smart home, but is not limited thereto.

In some embodiments, the access network device 102 is, for example, a node or device that accesses a terminal to a wireless network. The access network device may include at least one of an evolved NodeB (eNB) in a 5G communication system, a next generation eNB (ng-eNB), a next generation NodeB (gNB), a node B (NB), a home node B (HNB), a home evolved node B (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, an access node in a Wi-Fi system, but is not limited thereto.

In some embodiments, the technical solutions of the present disclosure can be applied to an open radio access network (Open RAN) architecture. In this case, the interfaces between or within the access network devices involved in the embodiments of the present disclosure can become internal interfaces of Open RAN, and the procedures and information exchange between these internal interfaces can be implemented through software or programs.

In some embodiments, the access network device 102 may be composed of a central unit (CU) and a distributed unit (DU), where the CU may also be referred to as a control unit. The CU-DU structure may split the protocol layers of the access network device, placing the functions of some protocol layers under the centralized control of the CU, and distributing the functions of the remaining part or all of the protocol layers in the DU, with the CU centrally controlling the DU, but is not limited thereto.

In some embodiments, the core network device 103 may be a single device, including a first network element 1031, a second network element 1032, a third network element 1033, a fourth network element 1034, a fifth network element 1035, a sixth network element 1036, a seventh network element 1037, etc., or may be multiple devices or device groups, respectively including all or part of the first network element 1031, the second network element 1032, the third network element 1033, the fourth network element 1034, the fifth network element 1035, the sixth network element 1036, the seventh network element 1037, etc. The network elements may be virtual or physical. The core network includes, for example, at least one of an Evolved Packet Core (EPC), a 5G Core Network (5GCN), and a Next Generation Core (NGC).

In some embodiments, the first network element 1031 may be, for example, a policy control function (PCF).

In some embodiments, the first network element 1031 may be used to support a unified policy framework and provide policy rules, and the name is not limited thereto.

In some embodiments, the second network element 1032 may be, for example, an application function (AF).

In some embodiments, the second network element 1032 may be implemented by an application server and used to provide application services, and the name is not limited thereto.

In some embodiments, the third network element 1033 may be, for example, a network exposure function (NEF).

In some embodiments, the third network element 1033 may be used to ensure the security of external applications to the 3GPP network, provide QoS customization capability exposure for external applications, subscribe to mobility status events, distribute AF requests, etc., and the name is not limited thereto.

In some embodiments, the fourth network element 1034 may be, for example, a unified data repository (UDR) function.

In some embodiments, the fourth network element 1034 may be used for unified data management (UDM) to store subscription data or read subscription data, and for PCF to store policy data or read policy data.

In some embodiments, the fifth network element 1035 may be, for example, a session management function (SMF).

In some embodiments, the fifth network element 1035 may be used for session management, execution of control policies issued by the PCF, selection of the UPF, IP address allocation for the UE, and other functions, and the name is not limited thereto.

In some embodiments, the sixth network element 1036 may be, for example, an access and mobility management function (AMF).

In some embodiments, the sixth network element 1036 may be used for mobility management, non-access stratum mobility management (NAS MM) signaling processing, NAS session management (SM) signaling routing, security anchor and security context management, etc., and the name is not limited thereto.

In some embodiments, the seventh network element 1037 may be, for example, a UDM.

In some embodiments, the seventh network element 1037 may be used, for example, to store and manage the permanent user ID of the 5G system, manage subscription information, manage service network element registration of the user, etc., and the name is not limited thereto.

In some embodiments, the second network element 1032 may be located outside the core network device 103 or may be located inside the core network device 103, and the embodiments of the present disclosure do not specifically limit this.

In some embodiments, the above communication system 100 may be a 5G communication system. It should be noted that the communication system 100 may also be other communication systems, such as a 4G communication system or a 6G communication system, and the embodiments of the present disclosure do not specifically limit this.

In FIGS. 1B and 1C, taking the 5G communication system as an example, the architecture of the communication system is exemplarily described. Here, the terminal 101 may be a UE, and the access network device 102 may be a RAN.

FIG. 1B is a schematic diagram of the architecture of an implementation of a communication system according to an embodiment of the present disclosure. As shown in FIG. 1B, the architecture of the 5G communication system is presented in the form of reference points.

N1 is a reference point between the UE and the AMF. N2 is a reference point between the RAN and the AMF. N3 is a reference point between the RAN and the UPF. N4 is a reference point between the SMF and the UPF. N5 is a reference point between the PCF and the AF. N6 is a reference point between the UPF and the data network (DN). N7 is a reference point between the SMF and the PCF. N8 is a reference point between the UDM and the AMF. N10 is a reference point between the UDM and the SMF. N11 is a reference point between the AMF and the SMF. N15 is a reference point between the SMF and the PCF. Uu is the interface between the UE and the RAN.

It should be noted that the NEF and UDR are not shown in FIG. 1B. However, various network elements in the communication system can interact with the UDR and the NEF.

FIG. 1C is a schematic diagram of the architecture of another implementation of a communication system according to an embodiment of the present disclosure. As shown in FIG. 1C, the architecture of the 5G communication system is presented in the form of service-based interfaces.

Namf is the service-based interface provided by the AMF. Nsmf is the service-based interface provided by the SMF. Nnef is the service-based interface provided by the NEF. Npcf is the service-based interface provided by the PCF. Nudm is the service-based interface provided by the UDM. Naf is the service-based interface provided by the AF.

It should be noted that the UDR is not shown in FIG. 1C, but the UDR can provide the service-based interface Nudr.

It can be understood that the communication system described in the embodiments of the present disclosure is for more clearly illustrating the technical solutions of the embodiments of the present disclosure and does not constitute a limitation on the technical solutions proposed in the embodiments of the present disclosure. Those of ordinary skill in the art will know that with the evolution of system architecture and the emergence of new service scenarios, the technical solutions proposed in the embodiments of the present disclosure are also applicable to similar technical problems.

The following embodiments of the present disclosure can be applied to the communication system 100 shown in FIG. 1A, or to some subjects in the communication system 100, but are not limited thereto. The subjects shown in FIG. 1A are illustrative. The communication system 100 may include all or part of the subjects in FIG. 1A, and may also include other subjects other than those in FIG. 1A. The number and form of each subject are arbitrary. The subjects may be physical or virtual. The connection relationships between the subjects are illustrative. The subjects may be unconnected or connected, and the connection may be in any manner, may be direct or indirect, and may be wired or wireless.

The various embodiments of the present disclosure can be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G New Radio (NR), Future Radio Access (FRA), New-Radio Access Technology (RAT), New Radio (NR), New radio access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) network, Device-to-Device (D2D) system, Machine to Machine (M2M) system, Internet of Things (IoT) system, Vehicle-to-Everything (V2X), systems using other communication methods, next-generation systems extended based on them, etc. In addition, multiple systems may also be combined (e.g., LTE or LTE-A combined with 5G, etc.) for application.

In some cases, services such as mobile media services, online AR/VR and other XR services, online games, video-based machine or drone remote control, etc., are expected to contribute increasingly higher traffic to communication networks. XR services involve multimodal data flows. Multimodal data is data describing the same service/application input from the same device or different devices (including sensors), and these data may be output to one or more destination device terminals. The data flows in multimodal data often have certain or even strong correlations, such as synchronization of audio and video streams, synchronization of haptics and vision, etc. The data flows of such media services themselves, between the data flows, and the requirements of these service data flows for network transmission, all have some common characteristics. The effective identification and utilization of these characteristics will be more conducive to the transmission and control of the network and services, and also more conducive to service guarantee and user experience.

In a further situation, XRM services and interactive media services require the communication system to comprehensively consider the QoS characteristics of the service data flows. The QoS characteristics include, for example, at least one of: whether parameters such as delay-sensitive guaranteed bit rate (GBR) data flow, guaranteed flow bit rate (GFBR), packet delay budget (PDB), and default maximum data burst volume (MDBV) can be simultaneously satisfied and consistent. For multiple XRM data flows of one terminal and XRM data flows of multiple terminals, the consistency of mutual QoS authorization and execution.

In some embodiments, PDU set-based processing may be supported for XRM SDFs, thereby enhancing QoS awareness and guarantee for SDFs, and enhancing the user's quality of experience (QoE).

In some embodiments, in systems such as 4G, 5G, 6G, V2X, the AF can provide PDU set QoS parameters and protocol description. In some embodiments, the PDU set QoS parameters may include at least one of: PDU set delay budget (PSDB), PDU set error rate (PSER), and PDU Set Integrated Handling Information (PSIHI). Then, the SMF and UPF can extend the packet headers of the PDUs in the PDU set of the SDF based on the protocol description and protocol header extension provided by the AF to carry PDU set information. The carried PDU information can be used by the access network for PDU set-based QoS control.

In some embodiments, the above PDU information may include at least one of: PDU set sequence number, start PDU or end PDU of the PDU set, PDU sequence number within the PDU set, number of PDUs in the PDU set, PDU set importance, and PDU set size. Here, PDU set importance is used to characterize the importance of a PDU set relative to other PDU sets in the same QoS flow.

It can be understood that the UPF performs SDF to QoS flow mapping based on the PDR, and maps (which may also be referred to as encapsulates) interrelated PDUs into PDU sets. In addition, the UPF may apply the same QoS policy to all PDU sets within the QoS flow. For example, the UPF may apply the same PDU set QoS parameters to all PDU sets in the QoS flow. In one example, the UPF may map application flows to QoS flows based on the packet detection information in the PDR. Some PDUs in the QoS flow may be associated with media components (e.g., intra-coded frames and predicted frames), and the UPF classifies these PDUs as belonging to PDU sets and performs corresponding control.

In some cases, a terminal may access a wireless network, and one or more devices may be connecting behind the terminal. The devices connecting behind the terminal may be used to implement XRM services or multimedia services. For example, the device may be an XR device, a head-mounted device, an audio device, a display device, a haptic device, etc. In some embodiments, the data flows corresponding to these devices may also have corresponding QoS requirements. Therefore, the communication system needs to implement QoS mapping and guarantee for the data flows of the devices connecting behind the terminal.

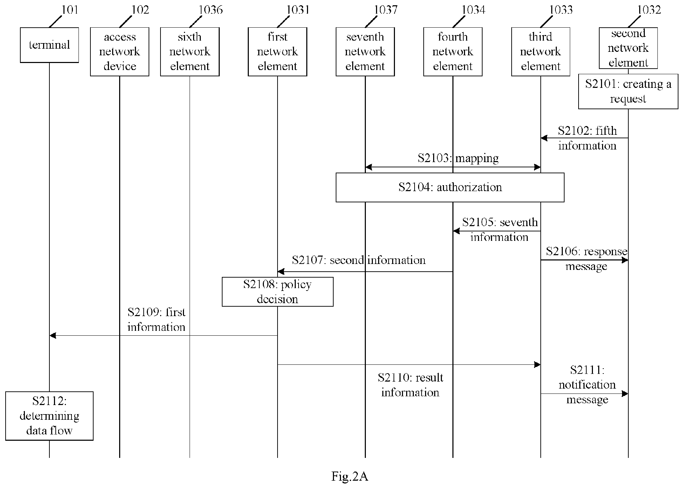

FIG. 2A is an interaction schematic diagram of a communication method according to an embodiment of the present disclosure. The communication method involved in the embodiments of the present disclosure can be applied to the communication system 100. As shown in FIG. 2A, the communication method of the embodiments of the present disclosure includes step S2101 to step S2112.

In step S2101, the second network element 1032 creates a request.

In some embodiments, the request created by the second network element 1032 may be an AF request.

In some embodiments, the created request may be used to provide fifth information.

In some embodiments, the fifth information may be used to determine a first rule for the first device.

In some embodiments, the first device may be a device connecting behind the terminal 101. In one example, the first device may be connecting behind the terminal 101 by wire or wirelessly. In one example, the first device may be an XRM device.

In some embodiments, the name of the first device is not limited, for example, it may be a tethered device, an external device, etc.

In some embodiments, the fifth information may include application information. In one example, the fifth information may include application guidance.

In some embodiments, the fifth information may include at least one of: identification information associated with the first device, a first DNN, or a first S-NSSAI.

In some embodiments, the identification information may be used to identify the first device.

In some embodiments, the name of the identification information is not limited, for example, it may be an identifier, an index number, an identification code, etc.

In some embodiments, the identification information may include at least one of: first identification information or second identification information.

In some embodiments, the first identification information may be used to identify the first device.

In some embodiments, the first identification information may be an identifier of the first device. In one example, the first identification information may be a hardware identifier of the first device. In one example, the first identification information may be an identifier assigned by the manufacturer of the first device. In one example, the first identification information may be an identifier assigned by the operator for the first device. In some embodiments, the same first device may have the same first identification information. In one example, XR devices of the same model may have the same identifier.

In some embodiments, the second identification information may be used to identify an application associated with the first device. In some embodiments, the application associated with the first device may include at least one of: an operating system of the first device, an application program of the first device. In some embodiments, the application associated with the first device may be dedicated to the first device. In this case, the second identification information used to identify the application associated with the first device may correspond to the first device and may be used to identify the first device. In some embodiments, the application associated with the first device may include at least one of: an application or an application group. It can be understood that the application associated with the first device may be a single application or multiple applications. For the latter case, multiple applications may constitute an application group. In some embodiments, the second identification information may include an application identifier associated with the first device. In an embodiment, the second identification information may include an application group identifier associated with the first device.

In some embodiments, the identification information may be carried in an application traffic descriptor component of the AF request.

In some embodiments, the first DNN may be a DNN assigned to a service related to the first device.

In some embodiments, the first S-NSSAI may be an S-NSSAI assigned to a service related to the first device.

In some embodiments, the second network element 1032 may create a new request. In this case, the AF may invoke the Nnef_ServiceParameter_Create service operation. The new request may contain subscription information for the result of UE policy delivery.

In some embodiments, the second network element 1032 may update or remove an existing request. In this case, the AF may invoke the Nnef_ServiceParameter_Update or Nnef_ServiceParameter_Delete service operation, and the corresponding transaction reference ID may be sent to the second network element 1032 via the Nnef_ServiceParameter_Create response message.

In some embodiments, before step S2101, the sixth network element 1036 may establish a terminal policy association. In one example, this policy association may be a UE policy association.

In some embodiments, before step S2101, the first network element 1031 may request the fourth network element 1034 to notify about data changes of the terminal 101. In one example, the data change of the terminal 101 may be a change in terminal policy information of the terminal 101. In some embodiments, the first network element 1031 may request the fourth network element 1034 to notify about data changes of the first device connecting behind the terminal 101. In one example, the data change of the first device may be a change in terminal policy information of the first device.

In step S2102, the second network element 1032 sends fifth information to the third network element 1033.

In some embodiments, the third network element 1033 may receive the fifth information.

In some embodiments, the fifth information may be carried in the request created by the second network element 1032.

In some embodiments, the fifth information may be carried in the Nnef_ServiceParameter_Create request message.

In some embodiments, the fifth information may be carried in the Nnef_ServiceParameter_Update request message.

In some embodiments, the fifth information may be carried in the Nnef_ServiceParameter_Delete request message.

In step S2103, the third network element 1033 interacts with the seventh network element 1037.

In some embodiments, the third network element 1033 may interact with the seventh network element 1037 to implement mapping.

In some embodiments, the third network element 1033 may interact with the seventh network element 1037 through the Nudm_SDM_Get service operation. In one example, the third network element 1033 may send an Nudm_SDM_Get request message to the seventh network element 1037, and then the seventh network element 1037 may send an Nudm_SDM_Get response message to the third network element 1033.

In some embodiments, the third network element 1033 may obtain information from the seventh network element 1037.

In some embodiments, the third network element 1033 may, based on the information obtained from the seventh network element 1037, implement mapping between the generic public subscription identifier (GPSI) and the subscription permanent identifier (SUPI) of the terminal 101.

In some embodiments, the third network element 1033 may, based on the information obtained from the seventh network element 1037, implement mapping between the external group identifier and the internal group identifier of the terminal 101.

In some embodiments, the request from the second network element 1032 may be authorized by the third network element 1033.

In some embodiments, according to the local configuration of the third network element 1033, mapping between the AF-Service-Identifier and the combination of DNN and S-NSSAI can be achieved. In some embodiments, the combination of DNN and S-NSSAI may be a combination of the first DNN and the first S-NSSAI.

In some embodiments, an external application identifier may be mapped to an application identifier known within the core network. In some embodiments, the second identification information may be an external application identifier. In some embodiments, the second identification information may be an internal application identifier.

In step S2104, the third network element 1033 performs an authorization.

In some embodiments, the third network element 1033 may manage the authorization of service specific parameters.

In some embodiments, the third network element 1033 may authorize the request for service specific parameters for the seventh network element 1037. In one example, for the case of Nnef_ServiceParameter_Create and Nnef_ServiceParameter_Update, the third network element 1033 may authorize the sending of the service specific parameter provision request to the seventh network element 1037 through the Nudm_ServiceSpecificAuthorisation_Create service operation.

In some embodiments, the third network element 1033 may authorize the removal of the service specific parameters provided by the seventh network element 1037. In one example, for the case of Nnef_ServiceParameter_Delete, the third network element 1033 may remove the authorization of the service specific parameters provided by the seventh network element 1037 through the Nudm_ServiceSpecificAuthorisation_Remove service operation.

In step S2105, the third network element 1033 sends seventh information to the fourth network element 1034.

In some embodiments, the fourth network element 1034 may receive the seventh information.

In some embodiments, the seventh information may be configured to indicate data associated with the first device.

In some embodiments, the seventh information may include data associated with the first device.

In some embodiments, the name of the seventh information is not limited, for example, it may be first device information, terminal information, service information, service specific information, etc.

In some embodiments, the seventh information may include identification information associated with the first device.

In some embodiments, the seventh information may be included in the AF request information.

In some embodiments, the seventh information may be stored by the fourth network element 1034 as application data.

In some embodiments, the seventh information may be stored together with the transaction reference identifier.

In step S2106, the third network element 1033 sends a response message to the second network element 1032.

In some embodiments, the second network element 1032 may receive the response message.

In some embodiments, the response message may be sent by the third network element 1033 in response to the request.

In some embodiments, the response message may be an Nnef_ServiceParameter_Create response message.

In some embodiments, the response message may be an Nnef_ServiceParameter_Update response message.

In some embodiments, the response message may be an Nnef_ServiceParameter_Delete response message.

In step S2107, the fourth network element 1034 sends second information to the first network element 1031.

In some embodiments, the first network element 1031 may receive the second information.

In some embodiments, the second information may be configured to indicate first data associated with the first device.

In some embodiments, the first data may include at least one of: new data associated with the first device, all data associated with the first device, or changed data among all data associated with the first device. In some cases, in the case where new data associated with the first device exists in the fourth network element 1034, the second information sent by the fourth network element 1034 may include the new data. For example, in the case where data associated with the first device does not exist in the fourth network element 1034 and new data associated with the first device is obtained, the fourth network element 1034 may carry the new data in the second information. In some cases, in the case where the data associated with the first device in the fourth network element 1034 changes, the second information sent by the fourth network element 1034 may include all the changed data associated with the first device. In some cases, in the case where the data associated with the first device in the fourth network element 1034 changes, the second information sent by the fourth network element 1034 may include the changed portion of the data associated with the first device.

It can be understood that, in some embodiments, the second information may be used to indicate a data change associated with the first device. The "data change" here may include providing new data, data changes, data deletion, etc., and the embodiments of the present disclosure do not specifically limit this.

In some embodiments, the fourth network element 1034 may send the second information upon receiving the seventh information.

In some embodiments, in the case of Nnef_ServiceParameter_Create, the data associated with the first device in the seventh information received by the fourth network element 1034 may be new data. In this case, the fourth network element 1034 may send the second information upon receiving the seventh information.

In some embodiments, the first network element 1031 may subscribe to the fourth network element 1034 for data changes of the terminal 101 and/or the first device. In this case, the fourth network element 1034 may send the second information upon discovering a data change of the terminal 101 and/or the first device. It can be understood that, in some cases, there may be no data change for the terminal 101 and/or the first device, and then the fourth network element 1034 may not send the second information.

In some embodiments, the name of the second information is not limited, for example, it may be a policy change indication, data change information, etc.

In some embodiments, the second information may be carried in an Nudr_DM_Notify message.

In step S2108, the first network element 1031 performs a policy decision.

In some embodiments, the first network element 1031 may perform policy decision according to the received second information to obtain the first information.

In some embodiments, the first information may be configured to indicate a first rule associated with the first device.

In some embodiments, the first rule may be used by the terminal 101 for mapping the traffic of the first service.

In some embodiments, the first rule may be a UE policy, and the first information may be UE policy information.

In some embodiments, the first information may include identification information.

In some embodiments, the identification information may correspond to at least one of: an identifier of the first device, an application identifier associated with the first device, an application group identifier associated with the first device, a first DNN, or a first S-NSSAI. It can be understood that, in some embodiments, the identification information may include at least one of: the identifier of the first device, the application identifier associated with the first device, the application group identifier associated with the first device, the first DNN, or the first S-NSSAI. In one example, the identification information may include first identification information, and the first identification information may include the identifier of the first device. In this case, the first identification information used to identify the first device may be implemented by the identifier (e.g., identifier) of the first device. In one example, the identification information may include first identification information, and the first identification information may include the first DNN and the first S-NSSAI. In this case, the first identification information used to identify the first device may be implemented by a combination of the first DNN and the first S-NSSAI. In one example, the identification information may include second identification information, and the second identification information may include an application identifier associated with the first device. In this case, the second identification information used to identify the application associated with the first device may be implemented by the application identifier. In one example, the identification information may include second identification information, and the second identification information may include an application group identifier associated with the first device. In this case, the second identification information used to identify the application associated with the first device may be implemented by the application group identifier. In one example, the identification information may include second identification information, and the second identification information may include the first DNN and the first S-NSSAI. In this case, the second identification information used to identify the application associated with the first device may be implemented by a combination of the first DNN and the first S-NSSAI. It should be noted that each of the first identification information and the second identification information may be implemented in other ways, and the embodiments of the present disclosure do not specifically limit this.

In some embodiments, the first information may include first routing information.

In some embodiments, the first routing information may be used to indicate a mapping relationship of the traffic associated with the first device.

In some embodiments, the first routing information may be used to indicate that the traffic associated with the first device corresponds to one of: an application service data flow associated with the first device, a single PDU session, or a single QoS flow group.

In some embodiments, the first routing information may be used to indicate that the traffic associated with the first device is mapped to the application service data flow associated with the first device. In some embodiments, the first routing information may be used to indicate that the traffic associated with the first device is transmitted through the application service data flow associated with the first device.

In some embodiments, the first routing information may be used to indicate that the traffic associated with the first device is mapped to the same PDU session. In some embodiments, the first routing information may be used to indicate that the traffic associated with the first device is transmitted through the same PDU session.

In some embodiments, the first routing information may be used to indicate that the traffic associated with the first device is mapped to the same QoS flow group. In some embodiments, the first routing information may be used to indicate that the traffic associated with the first device is transmitted through the same QoS flow group.

In some embodiments, the first rule may be a URSP rule.

In some embodiments, the URSP rule may include a first field. The first field includes identification information.

In some embodiments, the URSP rule may include a second field. The second field includes first routing information.

In some embodiments, the URSP rule may include at least one of: a traffic descriptor or a route selection descriptor.

In some embodiments, the first field may be included in the traffic descriptor. In this case, the identification information may be carried in the traffic descriptor.

In some embodiments, the first field may be included in the route selection descriptor. In this case, the identification information may be carried in the route selection descriptor.

In some embodiments, the second field may be included in the traffic descriptor. In this case, the first routing information may be carried in the traffic descriptor.

In some embodiments, the second field may be included in the route selection descriptor. In this case, the first routing information may be carried in the route selection descriptor.

In some embodiments, the traffic descriptor may be used to indicate the traffic descriptor component of the first rule.

In some embodiments, the traffic descriptor may include at least one of: rule priority, application descriptor, or tethered device identifier.

In some embodiments, the rule priority may be used to indicate the priority of applying the first rule to the terminal 101.

In some embodiments, the delivery of the traffic descriptor may be based on at least one of the first S-NSSAI, the first DNN, or an application traffic descriptor component.

In some embodiments, the application traffic descriptor component may include identification information.

In some embodiments, the application descriptor may include at least one of: an operating system identifier or an application program identifier. In some embodiments, the application descriptor may be the second identification information.

In some embodiments, the tethered device identifier may be used to identify the first device. In some embodiments, the tethered device identifier may be the first identification information.

In some embodiments, the route selection descriptor may include at least one of: route selection descriptor priority, route selection component, session and service continuity (SSC) mode selection, network slice selection, DNN selection, PDU session type selection, or attached device selection.

In some embodiments, the route selection descriptor priority may be used to indicate the priority of applying the route selection descriptor to the terminal 101.

In some embodiments, the route selection component may be used to define a route selection component.

In some embodiments, the SSC mode selection may be used to indicate an SSC mode.

In some embodiments, the network slice selection may be used to indicate one or more S-NSSAIs.

In some embodiments, the DNN selection may be used to indicate one or more DNNs.

In some embodiments, the PDU session type selection may be used to indicate a PDU session type.

In some embodiments, the attached device selection may be used to indicate at least one of: an application service data flow associated with the first device, a single PDU session, or a single QoS flow group. In some embodiments, the attached device selection may be the first routing information.

In step S2109, the first network element 1031 sends the first information to the terminal 101.

In some embodiments, the first network element 1031 may send the first information to the terminal 101 via the sixth network element 1036 and the access network device 102.

In some embodiments, the first network element 1031 may send the first information to the terminal 101 through a UE configuration update procedure.

In step S2110, the first network element 1031 sends result information to the third network element 1033.

In some embodiments, the third network element 1033 may receive the result information.

In some embodiments, the result information may be used to indicate the result of UE policy delivery.

In some embodiments, the result information may be carried in an Npcf_EventExposure_Notify message.

In step S2111, the third network element 1033 sends a notification message to the second network element 1032.

In some embodiments, the second network element 1032 may receive the notification message.

In some embodiments, the notification message may be an Nnef_ServiceParameter_Notify message.

In step S2112, the terminal 101 determines the data flow.

In some embodiments, the terminal 101 may determine, according to the first information, the data flow corresponding to the service data flow of the first device.

In some embodiments, the terminal 101 may map the data flow corresponding to the first device to the QoS flow according to the first rule indicated by the first information.

In some embodiments, the direction of the data flow may include at least one of: an uplink data flow or a downlink data flow.

In some embodiments, the terminal 101 may determine that the first service associated with the first device matches the identification information in the first information. In this case, the terminal 101 may determine that the first rule is applicable to the data flow of the first application.

In some embodiments, the first service may be a service corresponding to an application of the first device.

In some embodiments, the terminal 101 may determine the first rule applicable to the first device according to the rule priority and/or the route selection descriptor priority.

In some embodiments, the terminal 101 may determine an existing data flow corresponding to the traffic of the first service of the first device. In some embodiments, the terminal 101 may map the traffic of the first service of the first device to the existing data flow.

In some embodiments, the terminal 101 may determine a new data flow corresponding to the traffic of the first service of the first device. In some embodiments, the terminal 101 may map the traffic of the first service of the first device to the new data flow.

In some embodiments, the data flow corresponding to the traffic of the first service of the first device may include at least one of: an application service data flow, a PDU session, or a QoS flow group.

In some embodiments, in the case where multiple data flows are determined to correspond to the traffic of the first service, the terminal 101 may select one or more data flows from these data flows. In some embodiments, the terminal 101 may select one or more data flows according to protocol provisions, local configuration, higher-layer signaling, etc.

The communication method involved in the embodiments of the present disclosure may include at least one of steps S2101 to S2112. For example, step S2102 may be implemented as an independent embodiment. For example, step S2105 may be implemented as an independent embodiment. For example, step S2109 may be implemented as an independent embodiment. For example, a combination of steps S2102 and S2107 may be implemented as an independent embodiment. It should be noted that possible independent embodiments composed of one or more of steps S2101 to S2112 are not limited thereto.

In some embodiments, at least two of steps S2101 to S2112 may be exchanged in order or executed synchronously. For example, steps S2106 and S2107 may be exchanged in order or executed simultaneously.

In some embodiments, steps S2101, S2103 to S2112 are optional, and one or more of these steps may be omitted or substituted in different embodiments.

In some embodiments, steps S2101 to S2104, S2106 to S2112 are optional, and one or more of these steps may be omitted or substituted in different embodiments.

In some embodiments, steps S2101 to S2108, S2110 to S2112 are optional, and one or more of these steps may be omitted or substituted in different embodiments.

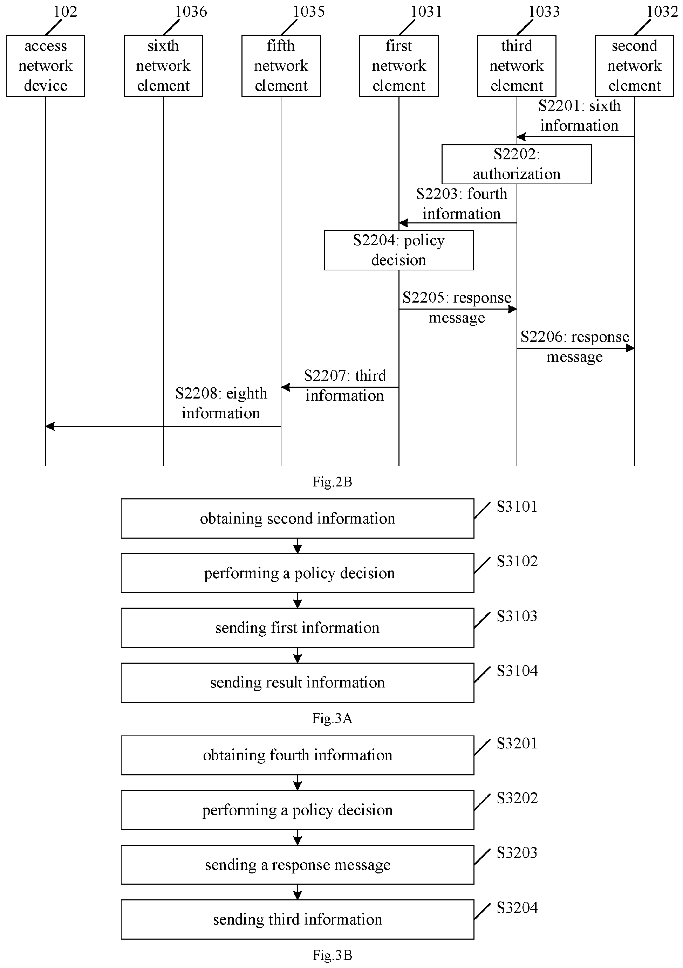

FIG. 2B is an interaction schematic diagram of a communication method according to an embodiment of the present disclosure. The communication method involved in the embodiments of the present disclosure can be applied to the communication system 100. As shown in FIG. 2B, the communication method of the embodiments of the present disclosure includes step S2201 to step S2208.

In step S2201, the second network element 1032 sends sixth information to the third network element 1033.

In some embodiments, the third network element 1033 may receive the sixth information.

In some embodiments, the sixth information may be used to request determining a second rule.

In some embodiments, the sixth information may be used to request a session resource for a first service of the first device.

In some embodiments, the name of the sixth information is not limited, and it may be, for example, a session creation request information or session QoS request information.

In some embodiments, the sixth information may include identification information associated with the first device.

In some embodiments, the identification information may include at least one of: first identification information or second identification information.

In some embodiments, the identification information may correspond to at least one of: an identifier of the first device, an application identifier associated with the first device, an application group identifier associated with the first device, a first DNN, a first S-NSSAI, or identification information of a first QoS flow group. It can be understood that, in some embodiments, the identification information may include at least one of: the identifier of the first device, the application identifier associated with the first device, the application group identifier associated with the first device, the first DNN, the first S-NSSAI, or the identification information of the first QoS flow group. In one example, the identification information may include first identification information, and the first identification information may include the identifier of the first device. In this case, the first identification information used to identify the first device may be implemented by the identifier (e.g., identifier) of the first device. In one example, the identification information may include first identification information, and the first identification information may include the first DNN and the first S-NSSAI. In this case, the first identification information used to identify the first device may be implemented by a combination of the first DNN and the first S-NSSAI. In one example, the identification information may include first identification information, and the first identification information may include identification information of the first QoS flow group. In this case, the first identification information used to identify the first device may be implemented by the identification information of the first QoS flow group. In one example, the identification information may include second identification information, and the second identification information may include an application identifier associated with the first device. In this case, the second identification information used to identify the application associated with the first device may be implemented by the application identifier. In one example, the identification information may include second identification information, and the second identification information may include an application group identifier associated with the first device. In this case, the second identification information used to identify the application associated with the first device may be implemented by the application group identifier. In one example, the identification information may include second identification information, and the second identification information may include the first DNN and the first S-NSSAI. In one example, the identification information may include second identification information, and the second identification information may include identification information of the first QoS flow group. In this case, the second identification information used to identify the application associated with the first device may be implemented by the identification information of the first QoS flow group. In this case, the second identification information used to identify the application associated with the first device may be implemented by a combination of the first DNN and the first S-NSSAI. It should be noted that each of the first identification information and the second identification information may be implemented in other ways, and the embodiments of the present disclosure do not specifically limit this.

In some embodiments, the application identifier associated with the first device may be mapped to a combination of the first DNN and the first S-NSSAI.

In some embodiments, the application group identifier associated with the first device may be mapped to a combination of the first DNN and the first S-NSSAI.

In some embodiments, the identification information of the first QoS flow group may be used to identify all QoS flows corresponding to the first service.

In some embodiments, the identification information of the first QoS flow group may include a group ID.

In some embodiments, the created request may further include at least one of: a UE address, a UE identifier, an AF identifier, an application identifier, a flow description, or QoS parameters.

In some embodiments, the second network element 1032 may create a request, and the sixth information may be carried in the created request.

In some embodiments, the sixth information may be carried in a request message sent by the second network element 1032 to the third network element 1033. In one example, the request message may be an AF session resource request message. In one example, the AF session resource request message may be an Nnef_AFSessionWithQoS_Create request message.

In some embodiments, the request message may be a message in the AF QoS request procedure.

In some embodiments, the request message may be a message in the AF QoS update procedure.

In some embodiments, the sixth information may be included in the QoS requirement for the first service of the first device carried in the AF session resource request message.

In step S2202, the third network element 1033 performs an authorization.

In some embodiments, the third network element 1033 may authorize the request message from the second network element 1032.

In some embodiments, the third network element 1033 may perform mapping.

In some embodiments, the third network element 1033 may implement mapping between the first service and the DNN and/or S-NSSAI. In one example, the third network element 1033 may map the AF service identifier of the first service to the DNN and/or S-NSSAI. In one example, the third network element 1033 may map an external application identifier to an application identifier known in the core network.

In some embodiments, the third network element 1033 may implement mapping between the external group identifier and the internal group identifier of the first service. In one example, the third network element 1033 may map the group identifier of the first service outside the core network to the group identifier inside the core network based on subscription information. In one example, the subscription information may be obtained from the UDM.

In step S2203, the third network element 1033 sends fourth information to the first network element 1031.

In some embodiments, the first network element 1031 may receive the fourth information.

In some embodiments, the fourth information may be configured to indicate a service characteristic of the first service.

In some embodiments, the fourth information may be configured to indicate a QoS attribute of the first service of the first device.

In some embodiments, the third network element 1033 may send the fourth information according to the sixth information received from the second network element 1032.

In some embodiments, the content of the fourth information may be partially or fully the same as the content of the sixth information.

In some embodiments, the third network element 1033 may send the sixth information in the request message received from the second network element 1032 to the first network element. In this case, the fourth information and the sixth information may be the same.

In some embodiments, the third network element 1033 may send the first information in different ways. In some embodiments, the sixth network element 1036 may determine the way to send the first information according to the information and/or parameters received from the second network element 1032.

In some embodiments, the way in which the third network element 1033 sends the fourth information may include: sending via a time sensitive communication and time synchronization function (TSCTSF), or sending directly.

In some embodiments, the third network element 1033 may determine to send the fourth information to the first network element 1031 via the TSCTSF. In some embodiments, the third network element 1033 may send the fourth information to the TSCTSF via the service-based interface Ntsftsf, and then the TSCTSF may send the fourth information to the first network element 1031 via the service-based interface Npcf. In one example, the third network element 1033 may send the fourth information to the TSCTSF via an Ntsctsf_QoSandTSCAssistance_Create request message, and then the TSCTSF may send the fourth information to the first network element 1031 via an Npcf_PolicyAuthorization_Create request message or an Npcf_PolicyAuthorization_Update request message.

In some embodiments, the third network element 1033 may determine to send the fourth information directly to the first network element 1031. In some embodiments, the third network element 1033 may send the fourth information to the first network element 1031 via the service-based interface Npcf. In one example, the third network element 1033 may send the fourth information to the first network element 1031 via an Npcf_PolicyAuthorization_Create request message.

In some embodiments, steps S2201 to S2203 may be omitted (i.e., not performed). In this case, the first network element 1031 will not obtain the fourth information. Then, the first network element 1031 may obtain the fourth information through other ways.

In some embodiments, the first network element 1031 may receive the fourth information from another first network element. In one example, after obtaining the fourth information, the another first network element may send the fourth information to the first network element 1031.

In some embodiments, the first network element 1031 may determine the fourth information based on operator operations, administration, and maintenance configuration.

In some embodiments, the first network element 1031 may determine the fourth information according to local configuration.

In step S2204, the first network element 1031 performs a policy decision.

In some embodiments, the first network element 1031 may perform policy decision to determine a second rule.

In some embodiments, the first network element 1031 may determine, based on the fourth information, a second rule associated with the first device.

In some embodiments, the second rule is used to perform QoS processing for a first service corresponding to the first device.

In some embodiments, the second rule may be a QoS rule. In some embodiments, the second rule may belong to a QoS rule.

In some embodiments, the second rule may be new. In some embodiments, based on the fourth information, the first network element 1031 may determine a new second rule.

In some embodiments, the second rule may be updated. In some embodiments, based on the fourth information, the first network element 1031 may determine to update an existing second rule.

In some embodiments, the name of the second rule is not limited, and it may be, for example, a traffic mapping policy, a traffic mapping rule, or a traffic mapping relationship.

In some embodiments, the second rule may be included in a policy and charging control (PCC) rule. In one example, the second rule may be part of the PCC rule.

In step S2205, the first network element 1031 sends a response message to the third network element 1033.

In some embodiments, the third network element 1033 may receive the response message.

In some embodiments, the first network element 1031 may send the response message after receiving the fourth information.

In some embodiments, the response message may be an Npcf_PolicyAuthorization_Create response message. In this case, the Npcf_PolicyAuthorization_Create response message may be sent by the first network element 1031 in response to the Npcf_PolicyAuthorization_Create request message.

In step S2206, the third network element 1033 sends a response message to the second network element 1032.

In some embodiments, the second network element 1032 may receive the response message.

In some embodiments, the response message may carry the authorization result of the first network element 1031 for the request message of the second network element 1032. Thus, the response message may be used to indicate to the second network element 1032 whether the request message is authorized.

In some embodiments, the third network element 1033 may send the response message to the second network element 1032 after receiving the response message from the first network element 1031.

In some embodiments, the response message may be an Nnef_AFSessionWithQoS_Create response message.

In step S2207, the first network element 1031 sends third information to the fifth network element 1035.

In some embodiments, the fifth network element 1035 may receive the third information.

In some embodiments, the third information may be configured to indicate the second rule associated with the first device.

In some embodiments, the third information may be sent to the fifth network element 1035 via the service-based interface Npcf.

In some embodiments, the first network element 1031 may initiate an SM Policy Association Modification procedure to send the third information.

In some embodiments, the third information may be carried in an Npcf_SMPolicyControl_UpdateNotify request message.

In step S2208, the fifth network element 1035 sends eighth information to the access network device 102.

In some embodiments, the access network device 102 may receive the eighth information.

In some embodiments, the eighth information may be configured to indicate a third rule associated with the first device.

In some embodiments, the third rule may include a QoS attribute.

In some embodiments, the QoS attribute may include at least one of: a QoS rule or QoS parameters.

In some embodiments, the QoS rule may be the second rule or determined based on the second rule.

In some embodiments, the fifth network element 1035 may send the eighth information to the access network device 102 via the sixth network element 1036.

In some embodiments, the QoS attribute may be a user plane policy.

In some embodiments, steps S2207 and S2208 may be implemented through a PDU Session Modification procedure.

In some embodiments, through the PDU session modification procedure, the access network device 102 may receive the identification information of the first device.

The communication method involved in the embodiments of the present disclosure may include at least one of steps S2201 to S2208. For example, step S2201 may be implemented as an independent embodiment. For example, step S2203 may be implemented as an independent embodiment. For example, step S2207 may be implemented as an independent embodiment. For example, step S2209 may be implemented as an independent embodiment. For example, a combination of steps S2201 and S2203 may be implemented as an independent embodiment. For example, a combination of steps S2207 and S2208 may be implemented as an independent embodiment. It should be noted that possible independent embodiments composed of one or more of steps S2201 to S2208 are not limited thereto.

In some embodiments, at least two of steps S2201 to S2108 may be exchanged in order or executed synchronously. For example, steps S2205 and S2207 may be exchanged in order or executed simultaneously.

In some embodiments, steps S2202 to S2108 are optional, and one or more of these steps may be omitted or substituted in different embodiments.

In some embodiments, steps S2201 to S2202, S2204 to S2208 are optional, and one or more of these steps may be omitted or substituted in different embodiments.

In some embodiments, steps S2201 to S2207, S2208 are optional, and one or more of these steps may be omitted or substituted in different embodiments.

In some embodiments, steps S2201 to S2207 are optional, and one or more of these steps may be omitted or substituted in different embodiments.

In some embodiments, terms such as "information," "message," "signal," "signaling," "report," "configuration," "indication," "instruction," "command," "channel," "parameter," "domain," "field," "symbol," "codeword," "codebook," "codepoint," "bit," "data," "program," "chip," etc., may be interchanged.

In some embodiments, terms such as "uplink," "uplink link," "physical uplink link," etc., may be interchanged. Terms such as "downlink," "downlink link," "physical downlink link," etc., may be interchanged. Terms such as "side," "sidelink," "sidelink communication," "direct connection," "direct link," "direct communication," "direct link communication," etc., may be interchanged.

In some embodiments, terms such as "radio," "wireless," "radio access network (RAN)," "access network (AN)," "RAN-based," etc., may be interchanged.

In some embodiments, terms such as "instant," "time point," "time," "time position," etc., may be interchanged. Terms such as "duration," "period," "time window," "window," "time," etc., may be interchanged.

In some embodiments, terms such as "obtain," "acquire," "get," "receive," "transmit," "bidirectional transmission," "send and/or receive" may be interchanged, and may be interpreted as various meanings such as receiving from other entities, obtaining from a protocol, obtaining from a higher layer, obtaining through own processing, autonomous implementation, etc.

In some embodiments, terms such as "send," "transmit," "report," "deliver," "transmission," "bidirectional transmission," "sending and/or receiving," etc., may be interchanged.

In some embodiments, terms such as "certain," "preset," "configured," "set," "indicated," "a certain," "any," "first," etc., may be interchanged. "Certain A," "preset A," "configured A," "set A," "indicated A," "a certain A," "any A," "first A" may be interpreted as A predetermined in a protocol, etc., or may be interpreted as A obtained through setting, configuration, or indication, etc., or may be interpreted as certain A, any A, or first A, etc., but is not limited thereto.

In some embodiments, the determination or judgment may be performed by a value represented by 1 bit (0 or 1), or by a boolean value (true or false), or by comparison of numerical values (e.g., comparison with a predetermined value), but is not limited thereto.

In some embodiments, terms such as "traffic," "flow," "stream," "data flow," etc., may be interchanged.

FIG. 3A is a flowchart schematic diagram of a communication method according to an embodiment of the present disclosure. The embodiments of the present disclosure relate to a communication method. The communication method is performed by the first network element 1031. As shown in FIG. 3A, the above method includes step S3101 to step S3104.

In step S3101, second information is obtained.

For optional implementations of step S3101, reference may be made to the optional implementations of step S2107 in FIG. 2A and other related parts in the embodiment involved in FIG. 2A, which will not be repeated here.

In some embodiments, the first network element 1031 may receive the second information sent by the fourth network element 1034, but is not limited thereto, and may also receive the second information sent by other entities.

In step S3102, a policy decision is performed.

For optional implementations of step S3102, reference may be made to the optional implementations of step S2108 in FIG. 2A and other related parts in the embodiment involved in FIG. 2A, which will not be repeated here.

In some embodiments, the first network element 1031 may perform policy decision based on the second information.

In step S3103, first information is sent.

For optional implementations of step S3103, reference may be made to the optional implementations of step S2109 in FIG. 2A and other related parts in the embodiment involved in FIG. 2A, which will not be repeated here.

In some embodiments, the first network element 1031 may send the first information to the terminal 101 via the sixth network element 1036 and the access network device 102, but is not limited thereto, and may also send the first information to other entities.

In step S3104, result information is sent.

For optional implementations of step S3104, reference may be made to the optional implementations of step S2110 in FIG. 2A and other related parts in the embodiment involved in FIG. 2A, which will not be repeated here.

In some embodiments, the first network element 1031 may send the result information to the third network element 1033, but is not limited thereto, and may also send the result information to other entities.

The communication method involved in the embodiments of the present disclosure may include at least one of steps S3101 to S3104. For example, step S3101 may be implemented as an independent embodiment. For example, step S3103 may be implemented as an independent embodiment. It should be noted that possible independent embodiments composed of one or more of steps S3101 to S3104 are not limited thereto.

In some embodiments, steps S3102, S3103, and S3104 are optional, and one or more of these steps may be omitted or substituted in different embodiments.

In some embodiments, steps S3101, S3102, and S3104 are optional, and one or more of these steps may be omitted or substituted in different embodiments.

FIG. 3B is a flowchart schematic diagram of a communication method according to an embodiment of the present disclosure. The embodiments of the present disclosure relate to a communication method. The communication method is performed by the first network element 1031. As shown in FIG. 3B, the above method includes step S3201 to step S3204.

In step S3201, fourth information is obtained.

For optional implementations of step S3201, reference may be made to the optional implementations of step S2203 in FIG. 2B and other related parts in the embodiment involved in FIG. 2B, which will not be repeated here.

In some embodiments, the first network element 1031 may receive the first information sent by the second network element 1032 (via the third network element 1033), but is not limited thereto, and may also receive the first information sent by other entities.

In some embodiments, the first network element 1031 may receive the fourth information sent by another first network element.

In some embodiments, the first network element 1031 may obtain the fourth information specified by a protocol.

In some embodiments, the first network element 1031 may obtain the fourth information from a higher layer.

In some embodiments, the first network element 1031 may perform processing to obtain the fourth information.

In some embodiments, the first network element 1031 may determine the fourth information based on operator operations, administration, and maintenance configuration.

In some embodiments, the first network element 1031 may determine the fourth information according to local configuration.

In step S3202, a policy decision is performed.

For optional implementations of step S3202, reference may be made to the optional implementations of step S2204 in FIG. 2B and other related parts in the embodiment involved in FIG. 2B, which will not be repeated here.

In some embodiments, the first network element 1031 may perform policy decision based on the fourth information.

In step S3203, a response message is sent.

For optional implementations of step S3203, reference may be made to the optional implementations of step S2205 in FIG. 2B and other related parts in the embodiment involved in FIG. 2B, which will not be repeated here.

In some embodiments, the first network element 1031 may send the response message to the third network element 1033, but is not limited thereto, and may also send the response message to other entities.

In step S3204, third information is sent.

For optional implementations of step S3204, reference may be made to the optional implementations of step S2207 in FIG. 2B and other related parts in the embodiment involved in FIG. 2B, which will not be repeated here.

In some embodiments, the first network element 1031 may send the third information to the fifth network element 1035, but is not limited thereto, and may also send the third information to other entities.

The communication method involved in the embodiments of the present disclosure may include at least one of steps S3201 to S3204. For example, step S3201 may be implemented as an independent embodiment. For example, step S3204 may be implemented as an independent embodiment. It should be noted that possible independent embodiments composed of one or more of steps S3201 to S3204 are not limited thereto.

In some embodiments, at least two of steps S3201 to S3204 may be exchanged in order or executed synchronously. For example, steps S3203 and S3204 may be exchanged in order or executed simultaneously.

In some embodiments, steps S3202, S3203, and S3204 are optional, and one or more of these steps may be omitted or substituted in different embodiments.

In some embodiments, steps S3201, S3202, and S3203 are optional, and one or more of these steps may be omitted or substituted in different embodiments.

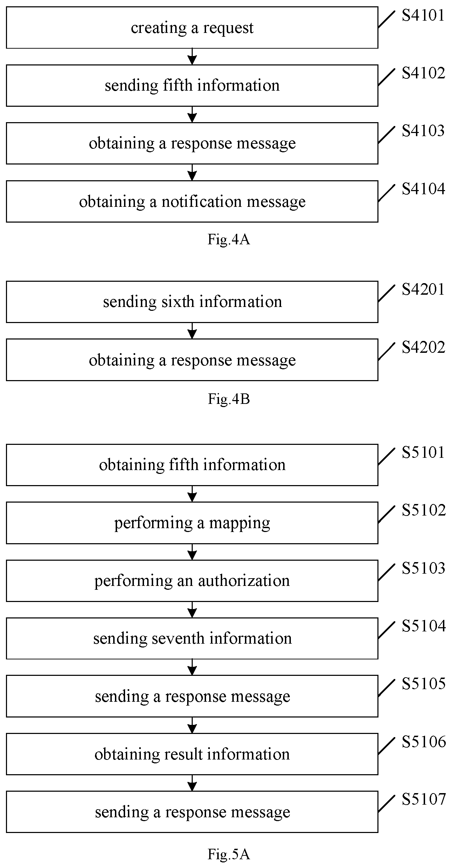

FIG. 4A is a flowchart schematic diagram of a communication method according to an embodiment of the present disclosure. The embodiments of the present disclosure relate to a communication method. The communication method is performed by the second network element 1032. As shown in FIG. 4A, the above method includes step S4101 to step S4104.

In step S4101, a request is created.

For optional implementations of step S4101, reference may be made to the optional implementations of step S2101 in FIG. 2A and other related parts in the embodiment involved in FIG. 2A, which will not be repeated here.

In some embodiments, the fifth information may be carried in the created request.

In step S4102, fifth information is sent.

For optional implementations of step S4102, reference may be made to the optional implementations of step S2102 in FIG. 2A and other related parts in the embodiment involved in FIG. 2A, which will not be repeated here.

In some embodiments, the second network element 1032 may send the fifth information to the third network element 1033, but is not limited thereto, and may also send the fifth information to other entities.

In step S4103, a response message is obtained.

For optional implementations of step S4103, reference may be made to the optional implementations of step S2106 in FIG. 2A and other related parts in the embodiment involved in FIG. 2A, which will not be repeated here.

In some embodiments, the first network element 1031 receives the response message sent by the third network element 1033, but is not limited thereto, and may also receive the response message sent by other entities.

In step S4104, a notification message is obtained.

For optional implementations of step S4104, reference may be made to the optional implementations of step S2111 in FIG. 2A and other related parts in the embodiment involved in FIG. 2A, which will not be repeated here.

In some embodiments, the first network element 1031 receives the notification message sent by the third network element 1033, but is not limited thereto, and may also receive the notification message sent by other entities.

The communication method involved in the embodiments of the present disclosure may include at least one of steps S4101 to S4104. For example, step S4102 may be implemented as an independent embodiment. For example, a combination of steps S4101 and S4102 may be implemented as an independent embodiment. It should be noted that possible independent embodiments composed of one or more of steps S4101 to S4104 are not limited thereto.

In some embodiments, steps S4101, S4103, and S4104 are optional, and one or more of these steps may be omitted or substituted in different embodiments.

FIG. 4B is a flowchart schematic diagram of a communication method according to an embodiment of the present disclosure. The embodiments of the present disclosure relate to a communication method. The communication method is performed by the second network element 1032. As shown in FIG. 4B, the above method includes step S4201 to step S4202.

In step S4201, sixth information is sent.

For optional implementations of step S4201, reference may be made to the optional implementations of step S2201 in FIG. 2B and other related parts in the embodiment involved in FIG. 2B, which will not be repeated here.

In some embodiments, the second network element 1032 may send the sixth information to the third network element 1033, but is not limited thereto, and may also send the sixth information to other entities.

In step S4202, a response message is obtained.

For optional implementations of step S4202, reference may be made to the optional implementations of step S2206 in FIG. 2B and other related parts in the embodiment involved in FIG. 2B, which will not be repeated here.

In some embodiments, the first network element 1031 receives the response message sent by the third network element 1033, but is not limited thereto, and may also receive the response message sent by other entities.

The communication method involved in the embodiments of the present disclosure may include at least one of steps S4201 to S3202. For example, step S4201 may be implemented as an independent embodiment. It should be noted that possible independent embodiments composed of one or more of steps S4201 to S4202 are not limited thereto.

In some embodiments, step S4202 is optional, and this step may be omitted or substituted in different embodiments.

FIG. 5A is a flowchart schematic diagram of a communication method according to an embodiment of the present disclosure. The embodiments of the present disclosure relate to a communication method. The communication method is performed by the third network element 1033. As shown in FIG. 5A, the above method includes step S5101 to step S5107.

In step S5101, fifth information is obtained.

For optional implementations of step S5101, reference may be made to the optional implementations of step S2102 in FIG. 2A and other related parts in the embodiment involved in FIG. 2A, which will not be repeated here.

In some embodiments, the third network element 1033 may receive the fifth information sent by the second network element 1032, but is not limited thereto, and may also receive the fifth information sent by other entities.

In step S5102, a mapping is performed.

For optional implementations of step S5102, reference may be made to the optional implementations of step S2103 in FIG. 2A and other related parts in the embodiment involved in FIG. 2A, which will not be repeated here.

In some embodiments, the third network element 1033 may interact with the seventh network element 1037 to perform mapping, but is not limited thereto, and may also interact with other entities.

In step S5103, an authorization is performed.

For optional implementations of step S5103, reference may be made to the optional implementations of step S2104 in FIG. 2A and other related parts in the embodiment involved in FIG. 2A, which will not be repeated here.

In some embodiments, the third network element 1033 may interact with the seventh network element 1037 to perform authorization, but is not limited thereto, and may also interact with other entities.

In step S5104, seventh information is sent.

For optional implementations of step S5104, reference may be made to the optional implementations of step S2105 in FIG. 2A and other related parts in the embodiment involved in FIG. 2A, which will not be repeated here.

In some embodiments, the third network element 1033 may send the seventh information to the fourth network element 1034, but is not limited thereto, and may also send the seventh information to other entities.

In step S5105, a response message is sent.

For optional implementations of step S5105, reference may be made to the optional implementations of step S2106 in FIG. 2A and other related parts in the embodiment involved in FIG. 2A, which will not be repeated here.

In some embodiments, the third network element 1033 may send the response message to the second network element 1032, but is not limited thereto, and may also send the response message to other entities.

In step S5106, result information is obtained.

For optional implementations of step S5106, reference may be made to the optional implementations of step S2110 in FIG. 2A and other related parts in the embodiment involved in FIG. 2A, which will not be repeated here.

In some embodiments, the third network element 1033 may receive the result information sent by the first network element 1031, but is not limited thereto, and may also receive the result information sent by other entities.

In step S5107, a response message is sent.

For optional implementations of step S5107, reference may be made to the optional implementations of step S2111 in FIG. 2A and other related parts in the embodiment involved in FIG. 2A, which will not be repeated here.

In some embodiments, the third network element 1033 may send the notification message to the second network element 1032, but is not limited thereto, and may also send the notification message to other entities.

The communication method involved in the embodiments of the present disclosure may include at least one of steps S5101 to S5107. For example, step S5101 may be implemented as an independent embodiment. For example, step S5104 may be implemented as an independent embodiment. It should be noted that possible independent embodiments composed of one or more of steps S5101 to S5107 are not limited thereto.

In some embodiments, at least two of steps S5101 to S5107 may be exchanged in order or executed synchronously. For example, steps S5104 and S5105 may be exchanged in order or executed simultaneously.

In some embodiments, steps S5102 to S5107 are optional, and one or more of these steps may be omitted or substituted in different embodiments.

In some embodiments, steps S5101 to S5103, S5105 to S5107 are optional, and one or more of these steps may be omitted or substituted in different embodiments.

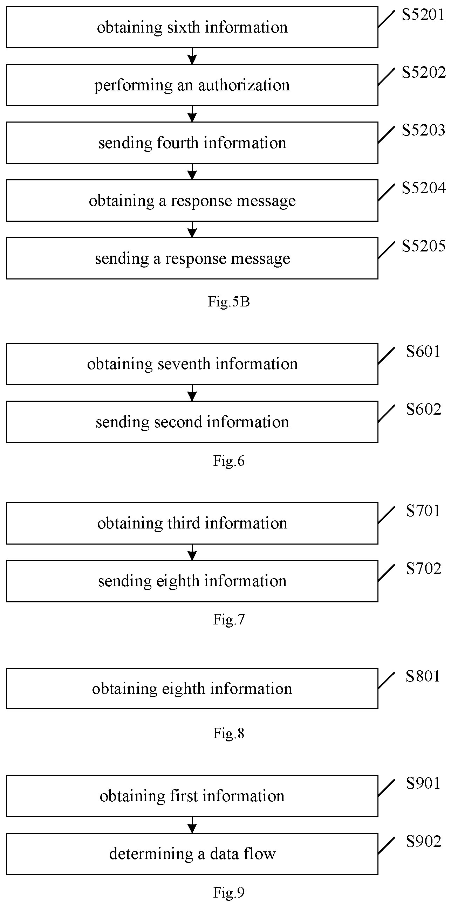

FIG. 5B is a flowchart schematic diagram of a communication method according to an embodiment of the present disclosure. The embodiments of the present disclosure relate to a communication method. The communication method is performed by the third network element 1033. As shown in FIG. 5B, the above method includes step S5201 to step S5205.

In step S5201, sixth information is obtained.

For optional implementations of step S5201, reference may be made to the optional implementations of step S2201 in FIG. 2B and other related parts in the embodiment involved in FIG. 2B, which will not be repeated here.

In some embodiments, the third network element 1033 may receive the sixth information sent by the second network element 1032, but is not limited thereto, and may also receive the sixth information sent by other entities.

In step S5202, an authorization is performed.

For optional implementations of step S5202, reference may be made to the optional implementations of step S2202 in FIG. 2B and other related parts in the embodiment involved in FIG. 2B, which will not be repeated here.

In step S5203, fourth information is sent.

For optional implementations of step S5203, reference may be made to the optional implementations of step S2203 in FIG. 2B and other related parts in the embodiment involved in FIG. 2B, which will not be repeated here.

In some embodiments, the third network element 1033 may send the fourth information to the first network element 1031, but is not limited thereto, and may also send the fourth information to other entities.

In step S5204, a response message is obtained.

For optional implementations of step S5204, reference may be made to the optional implementations of step S2205 in FIG. 2B and other related parts in the embodiment involved in FIG. 2B, which will not be repeated here.

In some embodiments, the third network element 1033 may receive the response message sent by the first network element 1031, but is not limited thereto, and may also receive the response message sent by other entities.

In step S5205, a response message is sent.

For optional implementations of step S5205, reference may be made to the optional implementations of step S2206 in FIG. 2B and other related parts in the embodiment involved in FIG. 2B, which will not be repeated here.

In some embodiments, the third network element 1033 may send the response message to the second network element 1032, but is not limited thereto, and may also send the response message to other entities.

The communication method involved in the embodiments of the present disclosure may include at least one of steps S5201 to S5205. For example, step S5201 may be implemented as an independent embodiment. For example, step S5203 may be implemented as an independent embodiment. For example, a combination of steps S5201 and S5203 may be implemented as an independent embodiment. It should be noted that possible independent embodiments composed of one or more of steps S5201 to S5205 are not limited thereto.

In some embodiments, steps S5202, S5203, S5204, and S5205 are optional, and one or more of these steps may be omitted or substituted in different embodiments.

In some embodiments, steps S5201, S5202, S5204, and S5205 are optional, and one or more of these steps may be omitted or substituted in different embodiments.

FIG. 6 is a flowchart schematic diagram of a communication method according to an embodiment of the present disclosure. The embodiments of the present disclosure relate to a communication method. The communication method is performed by the fourth network element 1034. As shown in FIG. 6, the above method includes step S601 to step S602.

In step S601, seventh information is obtained.

For optional implementations of step S601, reference may be made to the optional implementations of step S2105 in FIG. 2A and other related parts in the embodiment involved in FIG. 2A, which will not be repeated here.

In some embodiments, the fourth network element 1034 may receive the seventh information sent by the third network element 1033, but is not limited thereto, and may also receive the seventh information sent by other entities.

In step S602, second information is sent.

For optional implementations of step S602, reference may be made to the optional implementations of step S2107 in FIG. 2A and other related parts in the embodiment involved in FIG. 2A, which will not be repeated here.

In some embodiments, the fourth network element 1034 may send the second information to the first network element 1031, but is not limited thereto, and may also send the second information to other entities.

The communication method involved in the embodiments of the present disclosure may include at least one of steps S601 to S602. For example, step S601 may be implemented as an independent embodiment. For example, step S602 may be implemented as an independent embodiment. For example, a combination of steps S601 and S602 may be implemented as an independent embodiment. It should be noted that possible independent embodiments composed of one or more of steps S601 to S602 are not limited thereto.

In some embodiments, step S602 is optional, and this step may be omitted or substituted in different embodiments.

In some embodiments, step S601 is optional, and this step may be omitted or substituted in different embodiments.

FIG. 7 is a flowchart schematic diagram of a communication method according to an embodiment of the present disclosure. The embodiments of the present disclosure relate to a communication method. The communication method is performed by the fifth network element 1035. As shown in FIG. 7, the above method includes step S701 to step S702.

In step S701, third information is obtained.

For optional implementations of step S701, reference may be made to the optional implementations of step S2207 in FIG. 2B and other related parts in the embodiment involved in FIG. 2B, which will not be repeated here.

In some embodiments, the fifth network element 1035 may receive the third information sent by the first network element 1031, but is not limited thereto, and may also receive the third information sent by other entities.

In step S702, eighth information is sent.

For optional implementations of step S702, reference may be made to the optional implementations of step S2208 in FIG. 2B and other related parts in the embodiment involved in FIG. 2B, which will not be repeated here.

In some embodiments, the fifth network element 1035 may send the eighth information to the access network device 102, but is not limited thereto, and may also send the eighth information to other entities.

The communication method involved in the embodiments of the present disclosure may include at least one of steps S701 to S702. For example, step S701 may be implemented as an independent embodiment. For example, step S702 may be implemented as an independent embodiment. For example, a combination of steps S701 and S702 may be implemented as an independent embodiment. It should be noted that possible independent embodiments composed of one or more of steps S701 to S702 are not limited thereto.

In some embodiments, step S702 is optional, and this step may be omitted or substituted in different embodiments.

In some embodiments, step S701 is optional, and this step may be omitted or substituted in different embodiments.

FIG. 8 is a flowchart schematic diagram of a communication method according to an embodiment of the present disclosure. The embodiments of the present disclosure relate to a communication method. The communication method is performed by the access network device 102. As shown in FIG. 8, the above method includes step S801.

In step S801, eighth information is obtained.

For optional implementations of step S801, reference may be made to the optional implementations of step S2208 in FIG. 2B and other related parts in the embodiment involved in FIG. 2B, which will not be repeated here.

In some embodiments, the access network device 102 may receive the eighth information sent by the fifth network element 1035, but is not limited thereto, and may also receive the eighth information sent by other entities.

FIG. 9 is a flowchart schematic diagram of a communication method according to an embodiment of the present disclosure. The embodiments of the present disclosure relate to a communication method. The communication method is performed by the terminal 101. As shown in FIG. 9, the above method includes step S901 to step S902.

In step S901, first information is obtained.

For optional implementations of step S901, reference may be made to the optional implementations of step S2109 in FIG. 2A and other related parts in the embodiment involved in FIG. 2A, which will not be repeated here.

In some embodiments, the terminal 101 may receive the first information sent by the first network element 1031, but is not limited thereto, and may also receive the first information sent by other entities.

In step S902, the data flow is determined.

For optional implementations of step S902, reference may be made to the optional implementations of step S2112 in FIG. 2A and other related parts in the embodiment involved in FIG. 2A, which will not be repeated here.

In some embodiments, the first information may be used by the terminal 101 to determine the data flow corresponding to the service data flow of the first device.

The communication method involved in the embodiments of the present disclosure may include at least one of steps S901 to S902. For example, step S901 may be implemented as an independent embodiment. For example, a combination of steps S901 and S902 may be implemented as an independent embodiment. It should be noted that possible independent embodiments composed of one or more of steps S901 to S902 are not limited thereto.

In some embodiments, step S902 is optional, and this step may be omitted or substituted in different embodiments.

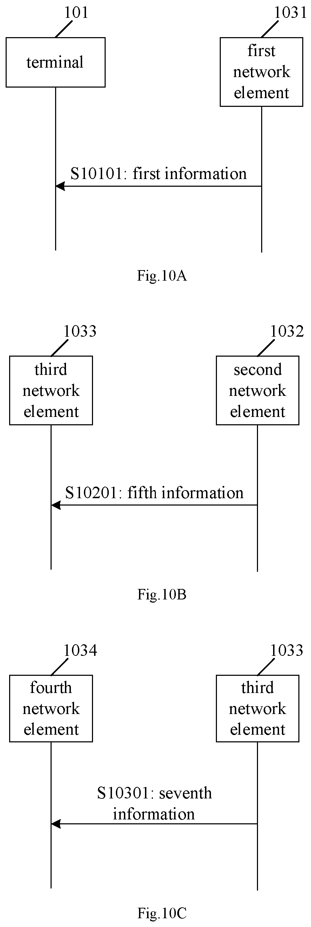

FIG. 10A is an interaction schematic diagram of a communication method according to an embodiment of the present disclosure. As shown in FIG. 10A, the embodiments of the present disclosure relate to a communication method. The above communication method includes step S10101.

In step S10101, the first network element 1031 sends first information to the terminal 101.

For optional implementations of step S10101, reference may be made to the optional implementations of step S2109 in FIG. 2A and other related parts in the embodiment involved in FIG. 2A, which will not be repeated here.

FIG. 10B is an interaction schematic diagram of a communication method according to an embodiment of the present disclosure. As shown in FIG. 10B, the embodiments of the present disclosure relate to a communication method. The above communication method includes step S10201.

In step S10201, the second network element 1032 sends fifth information to the third network element 1033.

For optional implementations of step S10201, reference may be made to the optional implementations of step S2102 in FIG. 2A and other related parts in the embodiment involved in FIG. 2A, which will not be repeated here.

FIG. 10C is an interaction schematic diagram of a communication method according to an embodiment of the present disclosure. As shown in FIG. 10C, the embodiments of the present disclosure relate to a communication method. The above communication method includes step S10301.

In step S10301, the third network element 1033 sends seventh information to the fourth network element 1034.

For optional implementations of step S10301, reference may be made to the optional implementations of step S2105 in FIG. 2A and other related parts in the embodiment involved in FIG. 2A, which will not be repeated here.

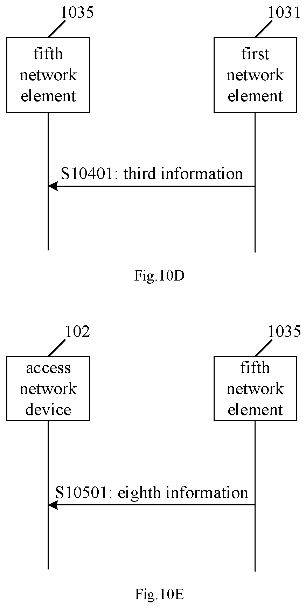

FIG. 10D is an interaction schematic diagram of a communication method according to an embodiment of the present disclosure. As shown in FIG. 10D, the embodiments of the present disclosure relate to a communication method. The above communication method includes step S10401.

In step S10401, the first network element 1031 sends third information to the fifth network element 1035.

For optional implementations of step S10401, reference may be made to the optional implementations of step S2207 in FIG. 2B and other related parts in the embodiment involved in FIG. 2B, which will not be repeated here.

FIG. 10E is an interaction schematic diagram of a communication method according to an embodiment of the present disclosure. As shown in FIG. 10E, the embodiments of the present disclosure relate to a communication method. The above communication method includes step S10501.

In step S10501, the fifth network element 1035 sends eighth information to the access network device 102.

For optional implementations of step S10501, reference may be made to the optional implementations of step S2208 in FIG. 2B and other related parts in the embodiment involved in FIG. 2B, which will not be repeated here.

Hereinafter, the embodiments of the present disclosure are exemplarily described through specific implementations.

In some embodiments, for a tethered device (i.e., the first device) behind the UE, the 5GS supports providing URSP rules to the UE. The URSP rule includes a tethered ID (i.e., identification information) as a traffic descriptor.

In some embodiments, according to the information provided by the AF for the tethered device, a URSP with a tethered ID in the traffic descriptor is sent to the UE (with the tethered device) for policy delivery.

In some embodiments, the tethered device is managed at the application layer.

In some embodiments, in the 5GS, the tethered ID is unique within the PLMN and is used in the traffic descriptor of the URSP rule to route the dedicated traffic of the tethered device to a dedicated combination (e.g., a combination of DNN and S-NSSAI).

In some embodiments, all data for the same device behind the UE may use the same PDU session or the same QoS flow group within a PDU session.

In some embodiments, the PCF (i.e., the first network element) may carry the tethered ID to the UE when delivering the URSP rule.

In some embodiments, when the UE initiates a corresponding (uplink or downlink) service request, if the requested traffic flow is an SDF of the tethered device, and the tethered ID corresponding to the traffic flow exists in the URSP rule, the SDF may be sent via an existing PDU session or QoS flow group corresponding to the tethered ID.

In some embodiments, the AF (i.e., the second network element) initiates an AF session request to the PCF, which carries the tethered ID, and/or a combination of DNN and S-NSSAI. The PCF performs a policy decision and authorization. Based on the tethered ID, and/or the combination of DNN and S-NSSAI received in the AF session request, it generates PCC rules and QoS authorization for the SDF of the tethered device.

In some embodiments, the URSP may explicitly add the tethered ID and/or tethered ID group indication (for example, adding the tethered ID in the traffic descriptor, and/or adding attached device selection in the route selection descriptor) to carry it to the UE; or, it may implicitly carry the tethered ID information to the UE (for example, carrying it in the application descriptor).

In some embodiments, the structure of the URSP rule may refer to Table 1 and Table 2.

**Table 1: Example of part of the URSP content**

| Information Name | Description |
|---|---|
| Rule Priority | Determining the order of applying URSP in the UE |
| Traffic Descriptor | This part defines the traffic descriptor component of the URSP rule |
| Application Descriptor | Consists of OS ID and OS App ID |
| Tethered ID | Matching the tethered ID of a dedicated tethered device configured in the UE having the tethered device |

In some embodiments, the PCF delivers the traffic descriptor with the tethered ID according to the S-NSSAI/DNN. The tethered ID is only applied to the transmission/reception traffic of the device behind the UE.

**Table 2: Example of part of the route selection descriptor content**

| Information Name | Description |
|---|---|
| Route Selection Descriptor Priority | Determines the order of applying the route selection descriptor |
| Route Selection Component | This part defines the route selection component |
| SSC Mode Selection | One value of SSC mode |
| Network Slice Selection | One value or list of values of S-NSSAI |
| DNN Selection | One value or list of values of DNN |
| PDU Session Type Selection | One value of PDU session type |
| Tethered Device Selection | Indicates that the traffic of the matching tethered device is transmitted through the same group or PDU session (device to network, or network to device, or both) |

In some embodiments, each URSP rule contains a list of route selection descriptors, which includes one or more route selection descriptors. Each route selection descriptor has a different route selection descriptor priority value. The route selection descriptor includes attached device selection.

In some embodiments, the attached device selection is used to indicate that the traffic of the matching tethered device is transmitted through the same group or PDU session. The direction of the traffic may be from the device to the network, from the network to the device, or both. For example, if an established PDU session is used to route the traffic of the tethered device, all traffic between the same tethered device behind the UE and the service application should be transmitted through the same PDU session or the same group.

In some embodiments, in the UE procedure of associating an application to a PDU session based on the URSP, the UE may evaluate the URSP rules according to the rule priority and determine whether an application matches a traffic descriptor (e.g., the tethered ID) in a URSP rule. When it is determined that a URSP rule is applicable to a given application (e.g., an XRM service related to a UE with a tethered device), the UE may select a route selection descriptor (e.g., the attached device selection) from the URSP according to the route selection descriptor priority. When a valid route selection descriptor is found, the UE may determine whether an existing PDU session matches all components in the selected route selection descriptor.

In some embodiments, when a matching PDU session exists, the UE associates the SDF of the tethered device (identified by the tethered ID) to the existing PDU session. That is, the traffic related to the tethered ID is routed to the PDU session.

In some embodiments, if the UE determines that multiple existing PDU sessions match, the UE may select a PDU session from these matching PDU sessions.

In some embodiments, in the procedure of service specific parameter provisioning by AF, the AF request sent to the NEF (i.e., the third network element) may include the following information:

### (1) Service Description

The service description is used to identify the service for which the application service parameters are intended. The service description in the AF request may be represented as a combination of DNN and S-NSSAI, an AF service identifier, or an external application identifier.

### (2) Service Parameters

The service parameters are service specific information that needs to be provided in the network and delivered to the UE to support the service identified by the service description.

In some embodiments, in the case where the AF provides application guidance for determining the URSP for the tethered device, the application traffic descriptor includes the tethered ID. Furthermore, in the 5GS, the tethered ID (or the tethered ID and the UE ID) is unique within the PLMN. The tethered ID (or the tethered ID and the UE ID) is used in the traffic descriptor of the URSP rule to route the dedicated traffic of the tethered device to a dedicated combination, for example, a DNN and S-NSSAI combination.

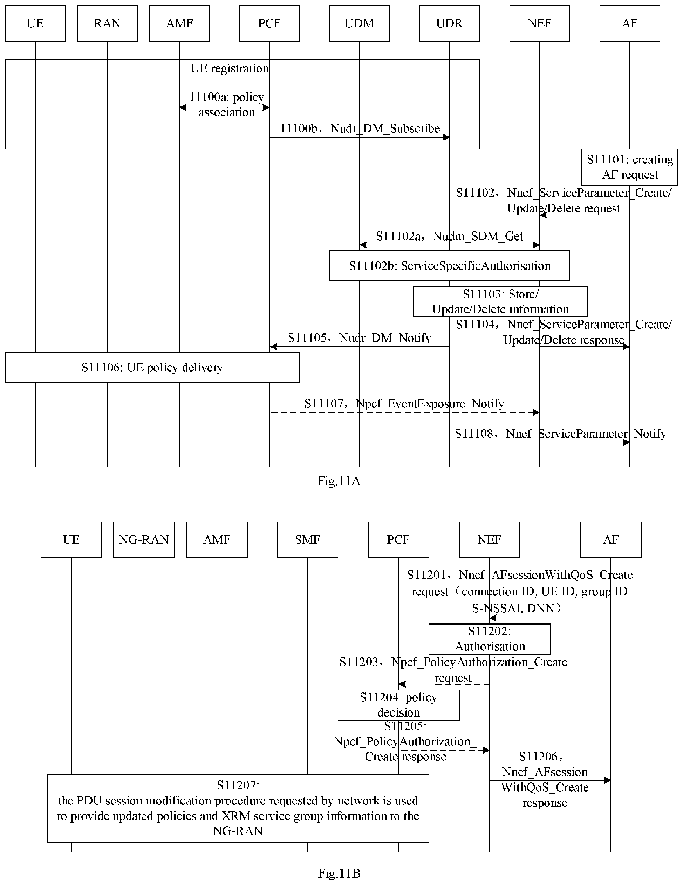

FIG. 11A is an interaction schematic diagram of an exemplary implementation of a communication method according to an embodiment of the present disclosure.

In some embodiments, the communication method in FIG. 11A may be implemented based on the procedure of service specific parameter provisioning by AF.

In some embodiments, the AF uses the Nnef_ServiceParameter service operation to provide service specific parameters to the HPLMN and the UE. In a roaming scenario, the PCF may be replaced by the H-PCF, and the AMF may interact with the V-PCF, and the V-PCF may interact with the H-PCF.

As shown in FIG. 11A, the communication method provided by the embodiments of the present disclosure may include step S11100a to step S11108.

In step S11100a, the AMF establishes a UE policy association.

In step S11100b, the PCF requests notification from the UDR (i.e., the fourth network element) about changes in UE policy information.

In step S11101, to create a new request, the AF invokes the Nnef_ServiceParameter_Create service operation. The request may include subscription information to achieve reporting of the result of UE policy delivery.

In some embodiments, to update or remove an existing request, the AF invokes the Nnef_ServiceParameter_Update or Nnef_ServiceParameter_Delete service operation, and uses the corresponding transaction reference ID. The transaction reference ID may be the one previously provided to the AF in the Nnef_ServiceParameter_Create response message.

In some embodiments, in the case where the AF provides application guidance for determining the URSP for the tethered device, the AF request includes the DNN and S-NSSAI assigned to the service related to the tethered device, and the application traffic descriptor component includes the tethered ID.

In some embodiments, the tethered ID is applied to the traffic sent/received by the device behind the UE.

In step S11102, the AF sends the AF request to the NEF. The NEF authorizes the AF request. The NEF performs the following mappings: according to local configuration, maps the AF service identifier to a combination of DNN and S-NSSAI; maps the external application identifier to the corresponding application identifier known in the core network.

In step S11102a, the NEF may invoke the Nudm_SDM_Get service operation to perform the following mappings: according to the information received from the UDM (i.e., the seventh network element), maps the GPSI in the target UE identifier to the SUPI; according to the information received from the UDM, maps the external group identifier in the target UE identifier to the internal group identifier.

In some embodiments, if the AF subscribes to the result of UE policy delivery, the AF may indicate where to receive the corresponding notification.

In some embodiments, in the case of Nnef_ServiceParameter_Create, the NEF assigns a transaction reference ID for the Nnef_ServiceParameter_Create request.

In step S11102b, in some embodiments, in the case of Nnef_ServiceParameter_Create or Nnef_ServiceParameter_Update, the NEF may need to authorize the service specific parameter provision request for the UDM by sending the Nudm_ServiceSpecificAuthorisation_Create service operation.

In some embodiments, if authorization for the service specific parameter provision request for the UDM is required as a response to an authorization request from the UDM (including the SUPI or internal group identifier), the NEF may skip mapping the GPSI or external group identifier.

In some embodiments, in the case of Nnef_ServiceParameter_Delete, the NEF requests the UDM to remove the authorization for the provided service specific parameters by sending the Nudm_ServiceSpecificAuthorisation_Remove service operation.

In step S11103, in some embodiments, in the case of Nnef_ServiceParameter_Create or Nnef_ServiceParameter_Update, the NEF stores the AF request information together with the assigned transaction reference ID in the UDR as "application data" (set to the data subset "service specific information").

In some embodiments, in the case of Nnef_ServiceParameter_Delete, the NEF deletes the AF request information from the UDR.

In step S11104, the NEF responds to the AF. In the case of the Nnef_ServiceParameter_Create response message, this response message may include the assigned transaction reference ID.

If the UE is registered with the network and the PCF, in step S11100, subscribes to notifications for data modifications in the UDR (e.g., AF service parameter provisioning information, SUPI, data set set to "application data", data subset set to "service specific information") by invoking Nudr_DM_Subscribe, then the following steps may be performed.

In step S11105, the PCF receives an Nudr_DM_Notify notification of data change from the UDR.

In some embodiments, for the SDF related to the tethered device, the PCF generates a URSP and carries the tethered ID in the traffic descriptor.

In some embodiments, the tethered ID matches the tethered ID of the dedicated tethered device configured for the UE having the tethered device.

In some embodiments, the PCF may deliver the traffic descriptor carrying the tethered ID based on the S-NSSAI/DNN/application traffic descriptor component. If necessary, the application traffic descriptor component may include the tethered ID.

In step S11106, the PCF initiates a UE policy delivery.

In some embodiments, based on the information provided by the AF for the policy delivery for the tethered device, the URSP rule carrying the tethered ID in the traffic descriptor is sent to the UE (with the tethered device).

In step S11107, in the case where the AF has subscribed to the notification of the result of UE policy delivery due to the provision of service specific parameters, and the AMF (i.e., the fifth network element) notifies the PCF of the UE policy container, the PCF sends the UE policy delivery result contained in the UE policy container as the procedure result to the NEF by sending Npcf_EventExposure_Notify. Npcf_EventExposure_Notify includes the SUPI, the GPSI list (if available), and the internal group identifier (if provided in step S11102a).

In step S11108, upon receiving Npcf_EventExposure_Notify, the NEF performs information mapping and triggers the appropriate Nnef_ServiceParameter_Notify message. The information mapping may include, for example: mapping from the AF Transaction Internal ID provided in the Notification Correlation ID to the AF Transaction ID, mapping of SUPI to GPSI, mapping of internal group identifier to external group identifier.

FIG. 11B is an interaction schematic diagram of an exemplary implementation of a communication method according to an embodiment of the present disclosure.

In some embodiments, the communication method in FIG. 11B may be implemented based on the procedure of setting up an AF session with required QoS.

As shown in FIG. 11B, the communication method provided by the embodiments of the present disclosure may include step S11201 to step S11207.

In step S11201, the AF sends an AF session resource request, for example, by creating an AF request via Nnef_AFsessionWithQoS_Create. The AF carries the tethered ID, group ID (optional), S-NSSAI (optional), DNN (optional), as well as UE address/UE identifier, AF identifier, application identifier, flow description, QoS parameters, and other information in the request message. Optionally, the group ID may be used to identify all flows corresponding to the tethered ID in the XRM service. Optionally, the XRM service knowledge here is used to identify the flow as an XRM service. Optionally, the associated identifier of the tethered device may also be implicitly carried through the application identifier. The S-NSSAI and DNN here are carried in the UE AF request. Alternatively, the UE may carry an external application identifier that can be mapped to a combination of S-NSSAI and DNN.

In step S11202, the NEF authorizes the AF request. In some embodiments, the NEF performs related mappings, including mapping of the application identifier to DNN and S-NSSAI; or, mapping of the external to internal XRM service group identifier.

In step S11203, the NEF authorizes the AF request and determines whether to invoke the TSCTSF or contact the PCF directly according to the parameters provided by the AF. The PCF receives the attributes provided by the AF from the NEF or the TSCTSF. The NEF triggers the Npcf_PolicyAuthorization_Create request, sending the authorized AF request to the PCF, carrying the above XRM service related information and QoS information for the PCF policy decision.

In step S11204, the PCF performs a policy decision. The PCF may determine that updated policy information or new policy information needs to be sent to the SMF. The PCF performs a policy decision and authorization (based on the S-NSSAI and DNN received in the AF request, generates PCC rules and QoS authorization for the service data flow of the XRM service). The PCF generates or updates PCC rules based on the NEF request. The PCF triggers Npcf_SMPolicyControl_UpdateNotify to update the policy information of the corresponding PDU session of the SMF, including the PCC rules and QoS policies related to the AF request.

In step S11205, the PCF sends an Npcf_PolicyAuthorization_Create response message to the NEF.

In step S11206, the NEF sends an Nnef_AFsessionWithQoS_Create response message to the AF. This message carries the result to inform the AF whether the request is authorized.

In step S11207, the SMF uses the PCC rules received in step S11204 to determine the authorized QoS for the QoS flow, and triggers the Network requested PDU Session Modification procedure, thereby sending the updated QoS attributes as user plane policy along with the tethered ID information for the relevant service flow (via the AMF) to the NG-RAN.

In the embodiments of the present disclosure, some or all steps and their optional implementations may be combined arbitrarily with some or all steps in other embodiments, and may also be combined arbitrarily with the optional implementations of other embodiments.

The embodiments of the present disclosure also provide a communication device for implementing any of the above methods. For example, the embodiments of the present disclosure also provide another communication device, including a unit or module for implementing the steps performed by the network device in any of the above methods. For example, the embodiments of the present disclosure also provide another communication device, including a unit or module for implementing the steps performed by the terminal in any of the above methods.

It should be understood that the division of units or modules in the above devices is only a division of logical functions, and may be fully or partially integrated into one physical entity in actual implementation, or may be physically separated. In addition, the units or modules in the devices may be implemented in the form of a processor calling software: for example, the device includes a processor, the processor is connected to a memory, and the memory stores instructions. The processor calls the instructions stored in the memory to implement any of the above methods or to implement the functions of the units or modules of the above devices, where the processor is, for example, a general-purpose processor, such as a central processing unit (CPU) or a microprocessor, and the memory is a memory within the device or a memory outside the device. Alternatively, the units or modules in the devices may be implemented in the form of a hardware circuit, and the functions of some or all of the units or modules may be realized by designing the hardware circuit. The above hardware circuit may be understood as one or more processors; for example, in one implementation, the above hardware circuit is an application-specific integrated circuit (ASIC), which realizes the functions of some or all of the units or modules described above by designing the logical relationships of the circuit elements; for another example, in another implementation, the above hardware circuit may be implemented by a programmable logic device (PLD), taking a Field Programmable Gate Array (FPGA) as an example, which may include a large number of logic gate circuits, and the connection relationships between the logic gate circuits are configured by a configuration file, thereby realizing the functions of some or all of the units or modules described above. All units or modules of the above devices may be implemented by the processor calling software, or all by the hardware circuit, or partly by the processor calling software and the remaining part by the hardware circuit.

In the embodiments of the present disclosure, a processor is a circuit with signal processing capabilities. In one implementation, the processor may be a circuit with instruction fetching and execution capabilities, such as a central processing unit, a microprocessor, a graphics processing unit (GPU) (which can be understood as a type of microprocessor), or a digital signal processor (DSP). In another implementation, the processor may implement certain functions through the logical relationships of a hardware circuit. The logical relationships of the above hardware circuit may be fixed or reconfigurable. For example, the processor may be a hardware circuit implemented by an application-specific integrated circuit or a programmable logic device, such as an FPGA. In the case of a reconfigurable hardware circuit, the process in which the processor loads a configuration file to configure the hardware circuit can be understood as the process in which the processor loads instructions to implement the functions of some or all of the units or modules described above. In addition, it may also be a hardware circuit designed for artificial intelligence, which can be understood as an ASIC, such as a Neural Network Processing Unit (NPU), a Tensor Processing Unit (TPU), a Deep learning Processing Unit (DPU), etc.

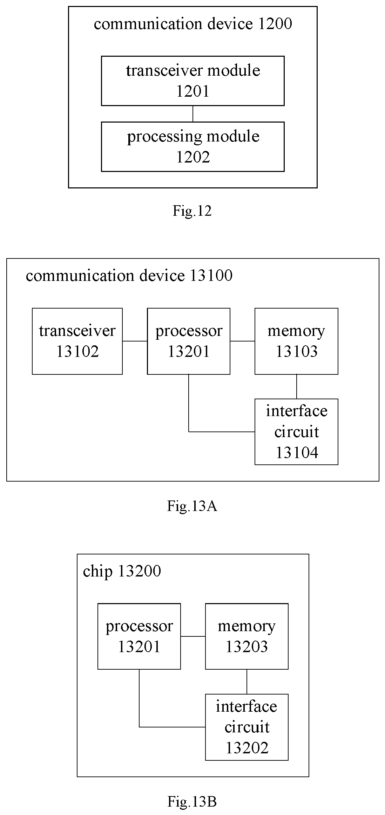

FIG. 12 is a structural schematic diagram of a communication device according to an embodiment of the present disclosure. As shown in FIG. 12, the communication device 1200 may include at least one of: a transceiver module 1201 or a processing module 1202.

In a first aspect, the communication device 1200 may be the first network element 1031. In some embodiments, the transceiver module 1201 may be configured to send first information, where the first information is configured to indicate a first rule associated with a first device, and the first device is connecting behind a terminal, where the first information includes identification information related to the first device.

In some embodiments, the identification information may include at least one of: first identification information, where the first identification information is used to identify the first device; or second identification information, where the second identification information is used to identify an application associated with the first device.

In some embodiments, the first information may further include first routing information, where the first routing information is configured to indicate that a traffic associated with the first device corresponds to one of: an application service data flow associated with the first device, a single PDU session, or a single QoS flow group.

In some embodiments, the first rule may include a URSP rule.

In some embodiments, the identification information may be carried in a traffic descriptor of the URSP rule.

In some embodiments, the first information may include first routing information, and the first routing information may be carried in a route selection descriptor of the URSP rule.

In some embodiments, the identification information may correspond to at least one of: an identifier of the first device; an application identifier associated with the first device; an application group identifier associated with the first device; a first DNN; or a first S-NSSAI.

In some embodiments, the transceiver module 1201 may be further configured to: receive second information, where the second information is configured to indicate first data associated with the first device; the processing module 1202 may be configured to determine the first rule based on the second information.

In some embodiments, the transceiver module 1201 may be further configured to: send third information, where the third information is configured to indicate a second rule associated with the first device, and the second rule is used to perform QoS processing for a first service corresponding to the first device.

In some embodiments, the transceiver module 1201 may be further configured to: receive fourth information, where the fourth information is configured to indicate a service characteristic of the first service; the processing module 1202 may be further configured to: determine the second rule based on the fourth information.

Optionally, the transceiver module 1201 may be configured to perform at least one of the communication steps (e.g., steps S2107, S2109, S2110, S2203, S2205, S2207) performed by the first network element 1031 in any of the above methods, which will not be repeated here. Optionally, the processing module 1202 may be configured to perform at least one of the steps other than the communication steps (e.g., steps S2108, S2204) performed by the first network element 1031 in any of the above methods, which will not be repeated here.

In a second aspect, the communication device 1200 may be the second network element 1032. In some embodiments, the transceiver module 1201 may be configured to send fifth information, where the fifth information is used to request determining a first rule associated with a first device, and the first device is connecting behind a terminal, where the fifth information includes identification information associated with the first device.

In some embodiments, the transceiver module 1201 may be further configured to: send sixth information, where the sixth information is used to request a session resource for a first service of the first device, where the sixth information includes identification information associated with the first device.

In some embodiments, the identification information may include at least one of: first identification information, where the first identification information is used to identify the first device; or second identification information, where the second identification information is used to identify an application associated with the first device.

In some embodiments, the identification information may correspond to at least one of: an identifier of the first device; an application identifier associated with the first device; an application group identifier associated with the first device; a first DNN; a first S-NSSAI; or identification information of a first QoS flow group.

Optionally, the transceiver module 1201 may be configured to perform at least one of the communication steps (e.g., steps S2102, S2106, S2111, S2201, S2206) performed by the second network element 1032 in any of the above methods, which will not be repeated here. Optionally, the processing module 1202 may be configured to perform at least one of the steps other than the communication steps (e.g., step S2101) performed by the second network element 1032 in any of the above methods, which will not be repeated here.

In a third aspect, the communication device 1200 may be the third network element 1033. In some embodiments, the transceiver module 1201 may be configured to receive fifth information, where the fifth information is used to request determining a first rule associated with a first device, and the first device is connecting behind a terminal, where the fifth information includes identification information associated with the first device.

In some embodiments, the transceiver module may be further configured to: send seventh information, where the seventh information is configured to indicate data associated with the first device.

In some embodiments, the transceiver module may be further configured to: receive sixth information, where the sixth information is used to request a session resource for a first service of the first device, where the sixth information includes identification information associated with the first device.

In some embodiments, the transceiver module may be further configured to: send fourth information, where the fourth information is configured to indicate a service characteristic of the first service.

In some embodiments, the identification information may include at least one of: first identification information, where the first identification information is used to identify the first device; or second identification information, where the second identification information is used to identify an application associated with the first device.

In some embodiments, the identification information may correspond to at least one of: an identifier of the first device; an application identifier associated with the first device; an application group identifier associated with the first device; a first DNN; a first S-NSSAI; or identification information of a first QoS flow group.

Optionally, the transceiver module 1201 may be configured to perform at least one of the communication steps (e.g., steps S2102, S2103, S2104, S2105, S2106, S2110, S2111, S2201, S2203, S2205, S2206) performed by the third network element 1033 in any of the above methods, which will not be repeated here. Optionally, the processing module 1202 may be configured to perform at least one of the steps other than the communication steps (e.g., step S2202) performed by the third network element 1033 in any of the above methods, which will not be repeated here.

In a fourth aspect, the communication device 1200 may be the fourth network element 1034. In some embodiments, the transceiver module 1201 may be configured to receive seventh information, where the seventh information is configured to indicate data associated with a first device, and the first device is connecting behind a terminal, where the seventh information includes identification information associated with the first device.

In some embodiments, the transceiver module 1201 may be further configured to: send second information, where the second information is configured to indicate first data associated with the first device.

In some embodiments, the identification information may include at least one of: first identification information, where the first identification information is used to identify the first device; or second identification information, where the second identification information is used to identify an application associated with the first device.

Optionally, the transceiver module 1201 may be configured to perform at least one of the communication steps (e.g., steps S2105, 2107) performed by the fourth network element 1034 in any of the above methods, which will not be repeated here.

In a fifth aspect, the communication device 1200 may be the fifth network element 1035. In some embodiments, the transceiver module 1201 may be configured to receive third information, where the third information is configured to indicate a second rule associated with a first device, the first device is connecting behind a terminal, and the second rule is used to perform QoS processing for a first service corresponding to the first device.

In some embodiments, the transceiver module 1201 may be further configured to: send eighth information, where the eighth information is configured to indicate a third rule associated with the first device, where the eighth information includes identification information associated with the first device.

In some embodiments, the third rule may include a QoS attribute.

In some embodiments, the identification information may include at least one of: first identification information, where the first identification information is used to identify the first device; or second identification information, where the second identification information is used to identify an application associated with the first device.

In some embodiments, the identification information may correspond to at least one of: an identifier of the first device; an application identifier associated with the first device; an application group identifier associated with the first device; a first DNN; a first S-NSSAI; or identification information of a first QoS flow group.

Optionally, the transceiver module 1201 may be configured to perform at least one of the communication steps (e.g., steps S2207, S2208) performed by the fifth network element 1035 in any of the above methods, which will not be repeated here.

In a sixth aspect, the communication device 1200 may be the access network device 102. In some embodiments, the transceiver module 1201 may be configured to receive eighth information, where the eighth information is configured to indicate a third rule associated with a first device, and the first device is connecting behind a terminal, where the eighth information includes identification information associated with the first device.

In some embodiments, the third rule may include a QoS attribute.

In some embodiments, the identification information may include at least one of: first identification information, where the first identification information is used to identify the first device; or second identification information, where the second identification information is used to identify an application associated with the first device.

In some embodiments, the identification information may correspond to at least one of: an identifier of the first device; an application identifier associated with the first device; an application group identifier associated with the first device; a first DNN; a first S-NSSAI; or identification information of a first QoS flow group.

Optionally, the transceiver module 1201 may be configured to perform at least one of the communication steps (e.g., step S2208) performed by the access network device 102 in any of the above methods, which will not be repeated here.

In a seventh aspect, the communication device 1200 may be the terminal 101. In some embodiments, the transceiver module 1201 may be configured to receive first information, where the first information is configured to indicate a first rule associated with a first device, and the first device is connecting behind the terminal, where the first information includes identification information related to the first device.

In some embodiments, the identification information may include at least one of: first identification information, where the first identification information is used to identify the first device; or second identification information, where the second identification information is used to identify an application associated with the first device.

In some embodiments, the first information may further include first routing information, where the first routing information is configured to indicate that a traffic associated with the first device corresponds to one of: an application service data flow associated with the first device, a single PDU session, or a single QoS flow group.

In some embodiments, the first rule may include a URSP rule.

In some embodiments, the identification information may be carried in a traffic descriptor of the URSP rule.

In some embodiments, the first information may include first routing information, and the first routing information may be carried in a route selection descriptor of the URSP rule.

In some embodiments, the identification information may correspond to at least one of: an identifier of the first device; an application identifier associated with the first device; an application group identifier associated with the first device; a first DNN; or a first S-NSSAI.

In some embodiments, the processing module 1202 may be configured to determine, according to the first rule, a data flow corresponding to a traffic of a first service of the first device, where the first rule corresponds to the identification information of the first device.

In some embodiments, the processing module 1202 may be configured to perform one of: determining an existing data flow corresponding to the traffic of the first service of the first device; or creating a new data flow corresponding to the traffic of the first service of the first device.

In some embodiments, the data flow may include at least one of: an application service data flow, a PDU session, or a QoS flow group.

Optionally, the transceiver module 1201 may be configured to perform at least one of the communication steps (e.g., step S2109) performed by the terminal 101 in any of the above methods, which will not be repeated here. Optionally, the processing module 1202 may be configured to perform at least one of the steps other than the communication steps (e.g., step S2112) performed by the terminal 101 in any of the above methods, which will not be repeated here.

In some embodiments, the transceiver module may include a sending module and/or a receiving module. The sending module and the receiving module may be separate or integrated. Optionally, the transceiver module may be interchanged with a transceiver.

In some embodiments, the processing module may be one module or may include multiple sub-modules. Optionally, the above multiple sub-modules respectively perform all or part of the steps required to be performed by the processing module. Optionally, the processing module may be interchanged with a processor.

FIG. 13A is a structural schematic diagram of a communication device according to an embodiment of the present disclosure. The communication device 13100 may be a network device (e.g., an access network device, a core network device, etc.), or a terminal (e.g., a user equipment, etc.), or a chip, a chip system, or a processor, etc., that supports the network device in implementing any of the above methods, or a chip, a chip system, or a processor, etc., that supports the terminal in implementing any of the above methods. The communication device 13100 may be used to implement the methods described in the above method embodiments, and for details, reference may be made to the description in the above method embodiments.

As shown in FIG. 13A, the communication device 13100 includes one or more processors 13101. The processor 13101 may be a general-purpose processor or a special-purpose processor, etc., for example, may be a baseband processor or a central processing unit. The baseband processor may be used to process communication protocols and communication data, and the central processing unit may be used to control a communication apparatus (such as a base station, a baseband chip, a terminal device, a terminal device chip, a DU or a CU, etc.), execute programs, and process data of the programs. Optionally, the communication device 13100 is used to perform any of the above methods. Optionally, the one or more processors 13101 are used to invoke instructions to cause the communication device 13100 to perform any of the above methods.

In some embodiments, the communication device 13100 further includes one or more transceivers 13102. When the communication device 13100 includes one or more transceivers 13102, the transceiver 13102 performs at least one of the sending and/or receiving communication steps (e.g., steps S2102, S2103, S2104, S2105, S2106, S2107, S2109, S2110, S2111, S2201, S2203, S2205, S2206, S2207, S2208, but not limited thereto) in the above methods, and the processor 13101 performs at least one of the other steps (e.g., steps S2101, S2108, S2112, S2202, S2204, but not limited thereto). In optional embodiments, the transceiver may include a receiver and/or a transmitter, and the receiver and transmitter may be separate or integrated. Optionally, terms such as transceiver, transceiving unit, transceiver circuit, interface circuit, interface, etc., may be interchanged. Terms such as transmitter, sending unit, transmitter circuit, etc., may be interchanged. Terms such as receiver, receiving unit, receiver circuit, etc., may be interchanged.

In some embodiments, the communication device 13100 further includes one or more memories 13103 for storing data. Optionally, all or part of the memory 13103 may also be located outside the communication device 13100. In optional embodiments, the communication device 13100 may include one or more interface circuits 13104. Optionally, the interface circuit 13104 is connected to the memory 13103, and the interface circuit 13104 may be used to receive data from the memory 13103 or other devices, and may be used to send data to the memory 13103 or other devices. For example, the interface circuit 13104 may read data stored in the memory 13103 and send the data to the processor 13101.

The communication device 13100 described in the above embodiments may be a network device or a terminal, but the scope of the communication device 13100 described in the present disclosure is not limited thereto, and the structure of the communication device 13100 may not be limited by FIG. 13A. The communication device may be an independent device or a part of a larger device. For example, the communication device may be: (1) an independent integrated circuit IC, or a chip, or a chip system or subsystem; (2) a collection of one or more ICs, optionally, the above IC collection may also include a storage component for storing data and programs; (3) an ASIC, such as a modem; (4) a module that can be embedded in other devices; (5) a receiver, a terminal device, a smart terminal device, a cellular phone, a wireless device, a handset, a mobile unit, a vehicle-mounted device, a network device, a cloud device, an artificial intelligence device, etc.; (6) others.

FIG. 13B is a structural schematic diagram of a chip according to an embodiment of the present disclosure. For the case where the communication device 13100 may be a chip or a chip system, reference may be made to the structural schematic diagram of the chip 13200 shown in FIG. 13B, but is not limited thereto.

The chip 13200 includes one or more processors 13201. The chip 13200 is used to perform any of the above methods.

In some embodiments, the chip 13200 further includes one or more interface circuits 13202. Optionally, terms such as interface circuit, interface, transceiver pin, etc., may be interchanged. In some embodiments, the chip 13200 further includes one or more memories 13203 for storing data. Optionally, all or part of the memory 13203 may be located outside the chip 13200. Optionally, the interface circuit 13202 is connected to the memory 13203, and the interface circuit 13202 may be used to receive data from the memory 13203 or other devices, and may be used to send data to the memory 13203 or other devices. For example, the interface circuit 13202 may read data stored in the memory 13203 and send the data to the processor 13201.

In some embodiments, the interface circuit 13202 performs at least one of the sending and/or receiving communication steps (e.g., steps S2102, S2103, S2104, S2105, S2106, S2107, S2109, S2110, S2111, S2201, S2203, S2205, S2206, S2207, S2208, but not limited thereto) in the above methods. The interface circuit 13202 performing the sending and/or receiving communication steps in the above methods, for example, means that the interface circuit 13202 performs data exchange between the processor 13201, the chip 13200, the memory 13203, or a transceiver device. In some embodiments, the processor 13201 performs at least one of the other steps (e.g., steps S2101, S2108, S2112, S2202, S2204, but not limited thereto).

The modules and/or devices described in the various embodiments, such as virtual devices, physical devices, chips, etc., may be arbitrarily combined or separated according to circumstances. Optionally, some or all of the steps may also be performed cooperatively by multiple modules and/or devices, which are not limited here.

The embodiments of the present disclosure also provide a storage medium, on which instructions are stored. When the instructions are run on the communication device 13100, the communication device 13100 is caused to execute any of the above methods. Optionally, the above storage medium is an electronic storage medium. Optionally, the above storage medium is a computer-readable storage medium, but is not limited thereto, and may also be a storage medium readable by other devices. Optionally, the above storage medium may be a non-transitory storage medium, but is not limited thereto, and may also be a transitory storage medium.

The embodiments of the present disclosure also provide a program product. When the program product is executed by the communication device 13100, the communication device 13100 is caused to execute any of the above methods. Optionally, the above program product is a computer program product.

The embodiments of the present disclosure also provide a computer program. When the computer program is run on a computer, the computer is caused to execute any of the above methods.

Other embodiments of the present disclosure will be readily apparent to those skilled in the art from consideration of the specification and practice of the invention disclosed herein. This disclosure is intended to cover any variations, uses, or adaptive changes of the present invention that follow the general principles of the present invention and include common general knowledge or conventional technical means in the art not disclosed by the present disclosure. The specification and examples are to be regarded as exemplary only, with the true scope and spirit of the invention being indicated by the following claims.

It should be understood that the present invention is not limited to the precise structures described above and shown in the accompanying drawings, and various modifications and changes may be made without departing from its scope. The scope of the invention is limited only by the appended claims.

## Claims

1. A communication method, performed by a first network element, comprising:
sending first information, wherein the first information is configured to indicate a first rule associated with a first device, and the first device is connecting behind a terminal;
wherein the first information comprises identification information related to the first device.

2. The method according to claim 1, wherein the identification information comprises at least one of:
first identification information, wherein the first identification information is used to identify the first device; or
second identification information, wherein the second identification information is used to identify an application associated with the first device.

3. The method according to claim 1 or 2, wherein the first information further comprises first routing information, the first routing information is configured to indicate that a traffic associated with the first device corresponds to one of: an application service data flow associated with the first device, a single packet data unit (PDU) session, or a single quality of service (QoS) flow group.

4. The method according to any one of claims 1 to 3, wherein the first rule comprises a user equipment route selection policy (URSP) rule.

5. The method according to claim 4, wherein the identification information is carried in a traffic descriptor of the URSP rule.

6. The method according to claim 4 or 5, wherein the first information comprises first routing information, and the first routing information is carried in a route selection descriptor of the URSP rule.

7. The method according to any one of claims 1 to 6, wherein the identification information corresponds to at least one of:
an identifier of the first device;
an application identifier associated with the first device;
an application group identifier associated with the first device;
a first data network name (DNN); or
a first single network slice selection assistance information (S-NSSAI).

8. The method according to any one of claims 1 to 7, further comprising:
receiving second information, wherein the second information is configured to indicate first data associated with the first device; and
determining the first rule based on the second information.

9. The method according to any one of claims 1 to 8, further comprising:
sending third information, wherein the third information is configured to indicate a second rule associated with the first device, and the second rule is used to perform a QoS processing for a first service corresponding to the first device.

10. The method according to claim 9, further comprising:
receiving fourth information, wherein the fourth information is configured to indicate a service characteristic of the first service; and
determining the second rule based on the fourth information.

11. A communication method, performed by a second network element, comprising:
sending fifth information, wherein the fifth information is used to request determining a first rule associated with a first device, and the first device is connecting behind a terminal;
wherein the fifth information comprises identification information associated with the first device.

12. The method according to claim 11, further comprising:
sending sixth information, wherein the sixth information is used to request a session resource for a first service of the first device;
wherein the sixth information comprises the identification information associated with the first device.

13. The method according to claim 11 or 12, wherein the identification information comprises at least one of:
first identification information, wherein the first identification information is used to identify the first device; or
second identification information, wherein the second identification information is used to identify an application associated with the first device.

14. The method according to any one of claims 11 to 13, wherein the identification information corresponds to at least one of:
an identifier of the first device;
an application identifier associated with the first device;
an application group identifier associated with the first device;
a first data network name (DNN);
a first single network slice selection assistance information (S-NSSAI); or
identification information of a first quality of service (QoS) flow group.

15. A communication method, performed by an access network device, comprising:
receiving eighth information, wherein the eighth information is configured to indicate a third rule associated with a first device, and the first device is connecting behind a terminal;
wherein the eighth information comprises identification information associated with the first device.

16. The method according to claim 15, wherein the third rule comprises a quality of service (QoS) attribute.

17. The method according to claim 15 or 16, wherein the identification information comprises at least one of:
first identification information, wherein the first identification information is used to identify the first device; or
second identification information, wherein the second identification information is used to identify an application associated with the first device.

18. The method according to any one of claims 15 to 17, wherein the identification information corresponds to at least one of:
an identifier of the first device;
an application identifier associated with the first device;
an application group identifier associated with the first device;
a first data network name (DNN);
a first single network slice selection assistance information (S-NSSAI); or
identification information of a first QoS flow group.

19. A communication method, performed by a terminal, comprising:
receiving first information, wherein the first information is configured to indicate a first rule associated with a first device, and the first device is connecting behind the terminal;
wherein the first information comprises identification information related to the first device.

20. The method according to claim 19, wherein the identification information comprises at least one of:
first identification information, wherein the first identification information is used to identify the first device; or
second identification information, wherein the second identification information is used to identify an application associated with the first device.

21. The method according to claim 19 or 20, wherein the first information further comprises first routing information, the first routing information is configured to indicate that a traffic associated with the first device corresponds to one of: an application service data flow associated with the first device, a single packet data unit (PDU) session, or a single quality of service (QoS) flow group.

22. The method according to any one of claims 19 to 21, wherein the first rule comprises a user equipment route selection policy (URSP) rule.

23. The method according to claim 22, wherein the identification information is carried in a traffic descriptor of the URSP rule.

24. The method according to claim 22 or 23, wherein the first information comprises first routing information, and the first routing information is carried in a route selection descriptor of the URSP rule.

25. The method according to any one of claims 19 to 24, wherein the identification information corresponds to at least one of:
an identifier of the first device;
an application identifier associated with the first device;
an application group identifier associated with the first device;
a first data network name (DNN); or
a first single network slice selection assistance information (S-NSSAI).

26. The method according to any one of claims 19 to 25, further comprising:
determining, according to the first rule, a data flow corresponding to a traffic of a first service of the first device, wherein the first rule corresponds to the identification information of the first device.

27. The method according to claim 26, wherein determining, according to the first rule, the data flow corresponding to the traffic of the first service of the first device comprises one of:
determining an existing data flow corresponding to the traffic of the first service of the first device; or
creating a new data flow corresponding to the traffic of the first service of the first device.

28. The method according to claim 26 or 27, wherein the data flow comprises at least one of: an application service data flow, a PDU session, or a QoS flow group.

29. A communication method, performed by a core network comprising a first network element, a second network element and a third network element, comprising:
sending, by the second network element, fifth information to the third network element, wherein the fifth information is used to request determining a first rule associated with a first device, the first device is connecting behind a terminal, and the fifth information comprises identification information associated with the first device; and
sending, by the first network element, first information, wherein the first information is configured to indicate the first rule associated with the first device, and the first information comprises the identification information related to the first device.

30. The method according to claim 29, wherein the core network further comprises a fourth network element, and the method further comprises:
sending, by the third network element, seventh information to the fourth network element, wherein the seventh information is configured to indicate data associated with the first device; and
sending, by the fourth network element, second information to the first network element, wherein the second information is configured to indicate first data associated with the first device.

31. A communication method, performed by a core network comprising a first network element and a fifth network element, comprising:
sending, by the first network element, third information to the fifth network element, wherein the third information is configured to indicate a second rule associated with a first device, and the second rule is used to perform a quality of service (QoS) processing for a first service corresponding to the first device.

32. The communication method according to claim 31, further comprising:
sending, by the fifth network element, eighth information, wherein the eighth information is configured to indicate a third rule associated with the first device, and the eighth information comprises identification information associated with the first device.

33. The communication method according to claim 31 or 32, wherein the core network further comprises a second network element and a third network element, and the method further comprises:
sending, by the second network element, sixth information to the third network element, wherein the sixth information is used to request a session resource for the first service of the first device, and the sixth information comprises identification information associated with the first device; and
sending, by the third network element, fourth information to the first network element, wherein the fourth information is configured to indicate a service characteristic of the first service.

34. A first network element, comprising:
a transceiver module configured to send first information, wherein the first information is configured to indicate a first rule associated with a first device, and the first device is connecting behind a terminal;
wherein the first information comprises identification information related to the first device.

35. A second network element, comprising:
a transceiver module configured to send fifth information, wherein the fifth information is used to request determining a first rule associated with a first device, and the first device is connecting behind a terminal;
wherein the fifth information comprises identification information associated with the first device.

36. An access network device, comprising:
a transceiver module configured to receive eighth information, wherein the eighth information is configured to indicate a third rule associated with a first device, and the first device is connecting behind a terminal;
wherein the eighth information comprises identification information associated with the first device.

37. A terminal, comprising:
a transceiver module configured to receive first information, wherein the first information is configured to indicate a first rule associated with a first device, and the first device is connecting behind the terminal;
wherein the first information comprises identification information related to the first device.

38. A first network element, comprising:
one or more processors; and
a memory storing instructions;
wherein the instructions, when executed by the first network element, cause the first network element to perform the communication method according to any one of claims 1 to 10.

39. A second network element, comprising:
one or more processors; and
a memory storing instructions;
wherein the instructions, when executed by the second network element, cause the second network element to perform the communication method according to any one of claims 11 to 14.

40. An access network device, comprising:
one or more processors; and
a memory storing instructions;
wherein the instructions, when executed by the access network device, cause the access network device to perform the communication method according to any one of claims 15 to 18.

41. A terminal, comprising:
one or more processors; and
a memory storing instructions;
wherein the instructions, when executed by the terminal, cause the terminal to perform the communication method according to any one of claims 19 to 28.

42. A communication system, comprising a terminal, an access network device, and a core network device;
wherein the terminal is configured to perform the communication method according to any one of claims 19 to 28, the access network device is configured to perform the communication method according to any one of claims 15 to 18, and the core network device is configured to perform the communication method according to any one of claims 29 to 33.

43. A storage medium, having stored therein instructions that, when run on a communication device, cause the communication device to perform the method according to any one of claims 1 to 33.
